(19) Europäisches Patentamt
European Patent Office
Office européen des brevets

(11) **EP 2 164 177 A1**

(12) **EUROPEAN PATENT APPLICATION**
published in accordance with Art. 153(4) EPC

(43) Date of publication:
**17.03.2010 Bulletin 2010/11**

(51) Int Cl.:
*H03M 13/09* (2006.01)   *H04B 7/04* (2006.01)
*H04J 11/00* (2006.01)   *H04L 1/00* (2006.01)

(21) Application number: **08764224.5**

(22) Date of filing: **24.06.2008**

(86) International application number:
**PCT/JP2008/001641**

(87) International publication number:
**WO 2009/004767 (08.01.2009 Gazette 2009/02)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.06.2007 JP 2007173470**

(71) Applicant: **Panasonic Corporation
Kadoma-shi
Osaka 571-8501 (JP)**

(72) Inventors:
• **MURAKAMI, Yutaka
Osaka 540-6207 (JP)**
• **OKAMURA, Shutai
Osaka 540-6207 (JP)**
• **ORIHASHI, Masayuki
Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **MULTI-ANTENNA TRANSMISSION DEVICE AND MULTI-ANTENNA TRANSMISSION METHOD**

(57)   Provided is a multi-antenna transmission device which can improve the reception quality when performing a repeated detection using a software value at the reception device side in a spatial multiplex MIMO system. A transmission device (1600) includes M (M is an integer not smaller than 2) transmission units (1601_1 to 1601_M) which interleave and map each of encoded data of M systems and transmit them. Each of the M transmission units (1601_1 to 1601_M) has: N (N is an integer not smaller than 2) interleavers (504A1 to 504AN (504X1 to 504XN)) which interleave the encoded data obtained from the same transmission data, by using different interleave patterns; and N antennas (510A1 to 510AN (510X1 to 510XN)) which transmit the signals obtained BY the respective interleavers.

FIG.19

**Description**

Technical Field

The present invention relates to a multi-antenna transmitting apparatus and multi-antenna transmission method, for example, represented by MIMO (Multiple-Input Multiple-Output).

Background Art

In multi-antenna communication represented by MIMO, data communication speed is improved by modulating a plurality of transmission data sequences individually and transmitting modulated signals from different antennas at the same time.

With this type of communication apparatus, interleaving encoded data, modulating the interleaved data, performing a predetermined radio processing including frequency conversion for the modulated signals, and then the modulated signals are provided to a plurality of transmit antennas. A scheme using MIMO spatial multiplexing refers to a scheme of transmitting different modulated signals with the same frequency at the same time from a plurality of transmit antennas.

Patent Document 1 proposes a transmitting apparatus that makes interleaving patterns different between transmit antennas. Further, Non-Patent Document 1 discloses a technique of improving received quality by performing iterative detection using soft values in a MIMO signal detection section of a MIMO receiving apparatus.

Patent Document 1: "Multi-antenna receiving apparatus, multi-antenna reception method, multi-antenna transmitting apparatus and multi-antenna communication system" International Publication No.2005/05885 Pamphlet
Non-Patent Document 1: B. M. Hochwald, and S. ten Brink, "Achieving near-capacity on a multiple-antenna channel" IEEE Trans. Commun., vol.51, no.3, pp.389-399, March 2003
Non-Patent Document 2: B. Lu, G. Yue, and X. Wang, "Performance analysis and design optimization of LDPC-coded MIMO OFDM systems" IEEE Trans. Signal Processing., vol.52, no.2, pp.348-361, Feb. 2004
Non-Patent Document 3: S. Bäro, J. Hagenauer, and M. Witzke, "Iterative detection of MIMO transmission using a list-sequential (LISS) detector" Proc. of IEEE ICC 2003, May 2003
Non-Patent Document 4: P. Robertson, E. Villebrun, and P. Höher, "A comparison of optimal and sub-optimal MAP decoding algorithms in the log domain" Proc. IEEE ICC 1995, pp.1009-1013, June 1995
Non-Patent Document 5: K. Kobayashi, Y. Murakami, M. Orihashi, and T. Matsuoka, "Varying interleave patterns with iterative decoding for improved performance in MIMO systems" Proc. of IEEE PIMRC2004, vol.2, pp.1429-1433, Sep. 2004
Non-Patent Document 6: "Performance analysis and design optimization of LDPC-coded MIMO OFDM systems" IEEE Trans. Signal Processing., vol.52, no.2, pp.348-361, Feb. 2004
Non-Patent Document 7: Motohiko Isaka, and Hideki Imai, "A tutorial on "parallel concatenated (Turbo) coding", "Turbo (iterative) decoding" and related topics"
Non-Patent Document 8: "Performance analysis of DSTTD based on diversity-multiplexing trade-off" proc. IEEE VTC 2005 spring

Disclosure of Invention

Problems to be Solved by the Invention

Improving received quality of data further by more increasing time, frequency and space diversity gain remains an issue for multi-antenna communication systems.

It is therefore an object of the present invention to provide a multi-antenna transmitting apparatus and multi-antenna transmission method that improve received quality in cases where iterative detection is performed using soft values on the receiving side in a MIMO system using spatial multiplexing.

Means for Solving the Problem

According to an aspect of the present invention, a multi-antenna transmitting apparatus adopts a configuration including: M transmitting sections, each transmitting section configured to interleave, map and transmit sequences of encoded data, M being an integer equal to or greater than two, wherein at least one of the M transmitting sections includes: N interleavers configured to interleave encoded data acquired from the same transmission data using different interleaving patterns, N being an integer equal to or greater than two; and N antennas configured to transmit signals acquired by the interleavers.

According to an aspect of the present invention, a multi-antenna transmitting apparatus adopts a configuration including: M transmitting sections configured to interleave, map and transmit M sequences of encoded data, M being an integer equal to or greater than two, wherein each M transmitting section includes: a plurality of interleavers configured to interleave encoded data acquired from the same transmission data using different interleaving patterns; and a plurality of antennas that are provided in a number equal to the number of said interleavers and configured to transmit signals acquired by said interleavers.

According to an aspect of the present invention, a multi-antenna transmitting apparatus adopts a configuration including: M transmitting sections configured to interleave, map and transmit M sequences of encoded data, M being an integer equal to or greater than two, wherein each M transmitting section includes: a plurality of interleavers configured to interleave encoded data acquired from the same transmission data using different interleaving patterns; and a section configured to provides a time difference between the encoded data received as input to the interleavers, or between interleaved encoded data outputted from the interleavers; and antennas that are provided in a number equal to the number of interleavers and configured to transmit interleaved signals, wherein said M transmitting sections employ different interleaving patterns.

According to one aspect of the present invention, a multi-antenna transmission method includes: distributing k-th encoded data to a plurality of sequences, k being $1 \leq k \leq M : M \geq 2$; and performing n-th interleaving on the n-th distributed data, n being $2 \leq n \leq N : N \geq 2$, and transmitting a mapped modulated signal from a n-th antenna, n being $\geq 2$, wherein N interleaving patterns vary.

According to one aspect of the present invention, a multi-antenna transmission method includes: distributing k-th encoded data to a plurality of sequences, k being $1 \leq k \leq M : M \geq 2$; and performing n-th interleaving on the n-th distributed data, n being $2 \leq n \leq N : N \geq 2$, and transmitting a mapped modulated signal from a n-th antenna, n being $\geq 2$, wherein MN interleaving patterns vary.

Advantageous Effects of Invention

According to the present invention, it is possible to realize a multi-antenna transmitting apparatus and multi-antenna transmission method that can increase time, frequency and space diversity gain, and that can improve received quality when iterative detection is performed using soft values on the receiving apparatus side.

Brief Description of Drawings

FIG.1 shows a configuration of a $N_t \times N_r$ MIMO system using spatial multiplexing, and FIG.1A shows a schematic configuration of a transmitting apparatus and FIG.1B shows a schematic configuration of a receiving apparatus;
FIG.2 shows the system model according to Embodiment 1, and FIG.2A shows a schematic configuration of the transmitting apparatus and FIG. 2B shows a schematic configuration of the receiving apparatus;
FIG.3 is an illustration provided to explain the orders of symbols after interleaving;
FIG.4 shows a factor graph where interleaving patterns of stream A and stream B are the same;
FIG.5 shows a factor graph where interleaving patterns of stream A and stream B are different;
FIG.6 is a block diagram showing a configuration example of the transmitting apparatus that transmits of a plurality of signal streams from a single antenna;
FIG.7 is a block diagram showing a configuration example of the transmitting apparatus according to Embodiment 1;
FIG.8 shows a configuration example of the transmission signal frames according to Embodiment 1;
FIG.9 is an illustration provided to explain the relationships between transmit and receive antennas in a communication scheme using a MIMO system;
FIG.10 is a block diagram providing an explanation for detailed operations of the encoding sections and the interleavers according to Embodiment 1;
FIG. 11 is a block diagram showing the configuration of the receiving apparatus according to Embodiment 1;
FIG. 12 is a block diagram showing a configuration example of the signal processing section performing detection and decoding in the receiving apparatus;
FIG.13 provides an explanation for iterative decoding (iterative detection);
FIG.14 shows relationships between candidate signal points and a received signal point;
FIG.15 is a factor graph acquired by the configuration of Embodiment 1;
FIG.16 is a block diagram showing a configuration example of the transmitting apparatus according to Embodiment 1;
FIG.17 is a block diagram showing a configuration example of the signal processing section performing detection and decoding in the receiving apparatus;

FIG. 18 is a block diagram showing a configuration example of the transmitting apparatus according to Embodiment 1;

FIG.19 is a block diagram showing a configuration example of the transmitting apparatus according to Embodiment 1;

FIG.20 is a block diagram showing a configuration example of the transmitting apparatus according to Embodiment 2;

FIG.21 shows a configuration example of the transmission signal frames according to Embodiment 2;

FIG.22 is a block diagram showing a configuration example of the receiving apparatus according to Embodiment 2;

FIG.23 is a block diagram showing a configuration example of the transmitting apparatus according to Embodiment 2;

FIG.24 shows an example of arranging symbols in the frequency domain, according to Embodiment 2;

FIG.25 is a block diagram showing a configuration example of the transmitting apparatus according to Embodiment 3; and

FIG.26 shows a configuration example of the transmission signal frames according to Embodiment 3.

Best Mode for Carrying Out the Invention

Now, embodiments of the present invention will be described in detail with reference to the accompanying drawings.

(Embodiment 1) (1) The outline of general MIMO system using spatial multiplexing

Prior to explaining features of the present embodiment, the outline of configuration, transmission method, and decoding method of a general MIMO system using spatial multiplexing, and the effect of interleaving will be described.

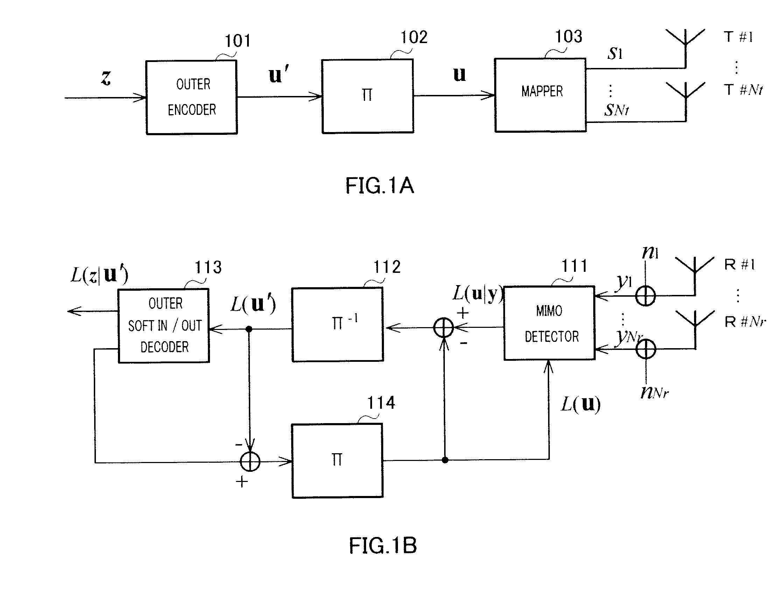

FIG.1 shows a configuration of a $N_t \times N_r$ MIMO system using spatial multiplexing. In FIG.1, FIG.1A shows a schematic configuration of a transmitting apparatus, and FIG.1B shows a schematic configuration of a receiving apparatus receiving signals transmitted from the transmitting apparatus of FIG.1A.

The transmitting apparatus of FIG.1A acquires encoded bit vector u' by encoding information vector z in encoding section (outer encoder) 101 and acquires interleaved encoded bit vector u = $(u_1,...,u_{Nt})$ by performing interleaving processing in interleaving section ($\Pi$) 102, where $u_i=(u_{il}, ..., u_{iM})$, M represents the number of transmission bits per symbol.

If the transmission vector s=$(s_1,...,S_{Nt})^T$ and the transmission signal $s_i$ transmitted from transmit antennas T#i is represented as map($u_i$), the normalized transmission energy value E is represented as E{$|s_i|^2$}=$E_s/N_t$ ($E_s$: total energy per channel).

As shown in FIG.1B, the receiving apparatus has detector (MIMO detector) 111, deinterleaver ($\Pi^{-1}$) 112, decoder (outer soft-in/soft-out decoder) 113 and interleaver ($\Pi$) 114.

If reception vector y received in the receiving apparatus is y=$(y_1,...,y_{Nr})$, reception vector y is represented by following equation 1.

[ 1 ]

$$\mathbf{y} = \left(y_1, \cdots, y_{Nr}\right)^T$$
$$= \mathbf{H}_{NtNr}\,\mathbf{s} + \mathbf{n} \qquad ...(\mathrm{E\,q\,u\,a\,t\,i\,o\,n\ 1})$$

In equation 1, $H_{NtNr}$ is the channel matrix, n=$(n_1,...,n_{Nr})^T$ is the noise vector, and $n_i$ is i.i.d. (independent identically distributed) complex Gaussian noise with an average value 0 and variance $\sigma^2$.

The transmission symbols and reception symbols have relationships of multidimensional Gaussian distributions, and the probability p(y|u) related to a reception vector is represented by next equation 2.

[ 2 ]

$$p(\mathbf{y} \mid \mathbf{u}) = \frac{1}{\left(2\pi\sigma^2\right)^{N_r}} \exp\left(-\frac{1}{2\sigma^2}\left\|\mathbf{y} - \mathbf{H}\mathbf{s}(\mathbf{u})\right\|^2\right) \qquad ...(\mathrm{E\,q\,u\,a\,t\,i\,o\,n\ 2})$$

Here, as FIG.1B, assuming that the receiving apparatus has MIMO detector 111 and outer soft-in/soft-out decoder 113, and performs iterative decoding. The vector of a log-likelihood ratio (L-value) in FIG.1B is represented by next equations 3 to 5 (e.g. see Non-Patent Documents 1 to 3).

[ 3 ]

$$L(\mathbf{u}) = \left( L(u_1), \cdots, L(u_{N_t}) \right)^T \qquad \ldots (\mathrm{Equation}\ 3)$$

[ 4 ]

$$L(u_i) = \left( L(u_{i1}), \cdots, L(u_{iM}) \right) \qquad \ldots (\mathrm{Equation}\ 4)$$

[ 5 ]

$$L(u_{ij}) = \ln \frac{P(u_{ij} = +1)}{P(u_{ij} = -1)} \qquad \ldots (\mathrm{Equation}\ 5)$$

(2) The outline of iterative detection

Here, MIMO signal iterative detection in a $N_t \times N_r$ MIMO system using spatial multiplexing will be explained.
The log-likelihood ratio of $X_{mn}$ is defined as the following equation.

[ 6 ]

$$L(u_{mn} \mid \mathbf{y}) = \ln \frac{P(u_{mn} = +1 \mid \mathbf{y})}{P(u_{mn} = -1 \mid \mathbf{y})} \qquad \ldots (\mathrm{Equation}\ 6)$$

Equation 6 is represented by the next equation using Baye's theorem.

[ 7 ]

$$
\begin{aligned}
L(u_{mn} \mid \mathbf{y}) &= \ln \frac{p(\mathbf{y} \mid u_{mn} = +1) P(u_{mn} = +1)/p(\mathbf{y})}{p(\mathbf{y} \mid u_{mn} = -1) P(u_{mn} = -1)/p(\mathbf{y})} \\
&= \ln \frac{P(u_{mn} = +1)}{P(u_{mn} = -1)} + \ln \frac{p(\mathbf{y} \mid u_{mn} = +1)}{p(\mathbf{y} \mid u_{mn} = -1)} \qquad \ldots (\mathrm{Equation}\ 7) \\
&= \ln \frac{P(u_{mn} = +1)}{P(u_{mn} = -1)} + \ln \frac{\sum_{U_{mn,+1}} p(\mathbf{y} \mid \mathbf{u}) p(\mathbf{u} \mid u_{mn})}{\sum_{U_{mn,-1}} p(\mathbf{y} \mid \mathbf{u}) p(\mathbf{u} \mid u_{mn})}
\end{aligned}
$$

Where $U_{mn,\pm 1} = \{u \mid u_{mn} = \pm 1\}$, Here, as explained in Non-Patent Documents 1, Non-Patent Document 3 and Non-Patent Document 4, if equation 7 is approximated using the following equation,

[8]

$$ln \sum a_j \approx max \ ln \ a_j \qquad ...(Equation \ 8)$$

equation 7 can be approximated as the following equation.

[9]

$$L(u_{mn} \mid \mathbf{y}) \approx \ln \frac{P(u_{mn} = +1)}{P(u_{mn} = -1)} + \max_{Umn,+1}\{\ln p(\mathbf{y} \mid \mathbf{u}) + P(\mathbf{u} \mid u_{mn})\}$$
$$- \max_{Umn,-1}\{\ln p(\mathbf{y} \mid \mathbf{u}) + P(\mathbf{u} \mid u_{mn})\} \qquad ...(Equation \ 9)$$

$P(u|u_{mn})$ and ln $P(u|u_{mn})$ in equation 9 are represented by the following equations.

[10]

$$P(\mathbf{u} \mid u_{mn}) = \prod_{(ij) \neq (mn)} P(u_{ij})$$
$$= \prod_{(ij) \neq (mn)} \frac{\exp\left(\dfrac{u_{ij} L(u_{ij})}{2}\right)}{\exp\left(\dfrac{L(u_{ij})}{2}\right) + \exp\left(-\dfrac{L(u_{ij})}{2}\right)} \qquad ...(Equation \ 10)$$

[11]

$$\ln P(\mathbf{u} \mid u_{mn}) = \left(\sum_{ij} \ln P(u_{ij})\right) - \ln P(u_{mn}) \qquad ...(Equation \ 11)$$

$$where \quad \ln P(u_{ij}) = \left|\frac{L(u_{ij})}{2}\right| \quad (u_{ij} sign(L(u_{ij}))) \qquad ...(Equation \ 11\text{-}1)$$

Incidentally, the logarithmic probability of the equation defined in equation 2 is represented as the following equation.

[12]

$$\ln P(\mathbf{y} \mid \mathbf{u}) = -\frac{N_r}{2}\ln(2\pi \sigma^2) - \frac{1}{2\sigma^2}\|\mathbf{y} - \mathbf{Hs(u)}\|^2 \qquad ...(Equation \ 12)$$

Accordingly, from equations 9 and 12, in MAP (Maximum A Posteriori Probability) or APP (A Posteriori Probability), a posteriori L-value is represented as the following equation (see Non-Patent Document 2).

[ 1 3 ]

$$L(u_{mn} \mid \mathbf{y}) = \ln \frac{\sum_{U_{mn,+1}} \exp\left\{-\frac{1}{2\sigma^2} \left\| \mathbf{y} - \mathbf{Hs(u)} \right\|^2 + \sum_{ij} \ln P\left(u_{ij}\right)\right\}}{\sum_{U_{mn,-1}} \exp\left\{-\frac{1}{2\sigma^2} \left\| \mathbf{y} - \mathbf{Hs(u)} \right\|^2 + \sum_{ij} \ln P\left(u_{ij}\right)\right\}}$$

...(Equation 13)

Hereinafter, iterative detection using equation 13 is referred to as "iterative APP decoding."

From equations 9 and 12, the posteriori L-value in log-likelihood ratio utilizing max-log approximation (see Non-Patent Document 5) (max-log APP) is represented as the following equations (see Non-Patent Documents 1 and 3).

[ 1 4 ]

$$L(u_{mn} \mid \mathbf{y}) \approx \max_{U_{mn,+1}}\left\{\Psi(\mathbf{u}, \mathbf{y}, L(\mathbf{u}))\right\} - \max_{U_{mn,-1}}\left\{\Psi(\mathbf{u}, \mathbf{y}, L(\mathbf{u}))\right\} \quad \text{...(Equation 14)}$$

[ 1 5 ]

$$\Psi(\mathbf{u}, \mathbf{y}, L(\mathbf{u})) = -\frac{1}{2\sigma^2} \left\| \mathbf{y} - \mathbf{Hs(u)} \right\|^2 + \sum_{ij} \ln P\left(u_{ij}\right) \quad \text{...(Equation 15)}$$

Hereinafter, iterative detection using equations 14 and 15 is referred to as "iterative max-log APP decoding." The extrinsic information required in iterative detection can be found by subtracting prior inputs from equation 13 or 14.

(3) The system model and iterative decoding of the present embodiment

(3-1) The system model

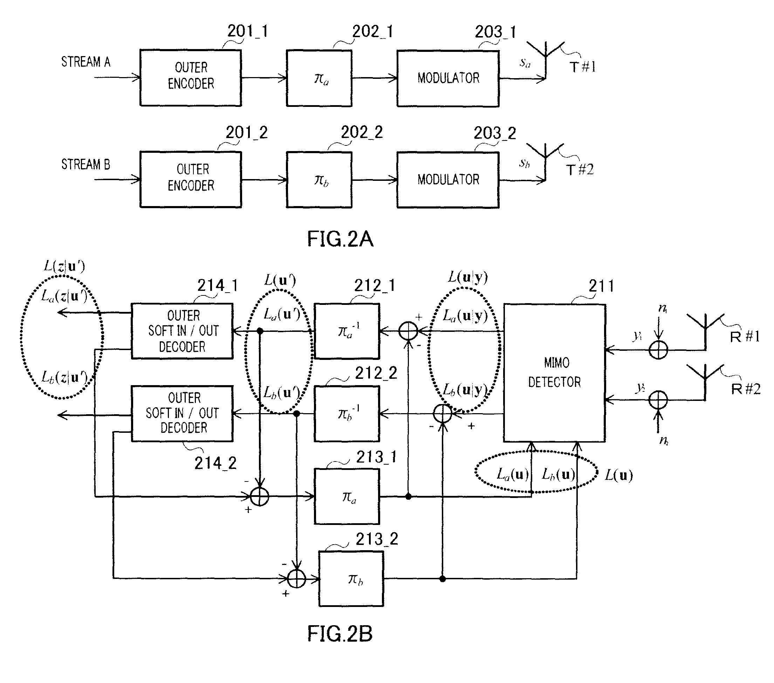

FIG.2 shows the system model of the present embodiment. For ease of explanation, FIG.2 shows the simplest 2 × 2 MIMO system using spatial multiplexing as an example. In FIG.2, FIG.2A is a schematic configuration of the transmitting apparatus and FIG.2B shows a schematic configuration of the receiving apparatus receiving a signal transmitted from the transmitting apparatus of FIG.2A.

In the transmitting apparatus of FIG.2, encoding section (outer encoder) 201_1 encodes stream A and encoding section (outer encoder) 201_2 encodes stream B. With the present embodiment, encoding sections 201_1 and 201_2 are formed with LDPC encoders that perform coding using the same LDPC codes.

Interleaver ($\pi_a$) 202_1 interleaves stream A encoded in encoding section 201_1, and interleaver ($\pi_b$) 202_2 interleaves stream B encoded in encoding section 201_2.

Modulation sections (modulators) 203_1 and 203_2 individually modulate interleaved streams A and B, and then modulated streams A and B are transmitted from transmit antennas T #1 and T #2. Here, the modulation scheme in modulation sections 203_1 and 203_2 is $2^h$-QAM (whereby one symbol is formed with h bits).

The receiving apparatus of FIG.2B iteratively detects (iterative APP decoding (or max-log APP decoding)) the above MIMO signals. With the present embodiment, the transmission apparatus performs LDPC coding, so that the receiving apparatus, for example, performs sum-product decoding as LDPC decoding.

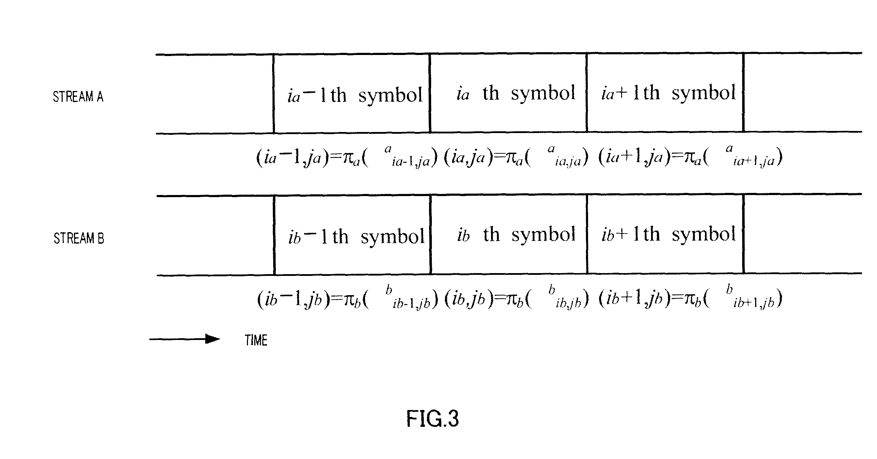

FIG.3 shows transmission frame configurations, in particular, shows the order of interleaved symbols. In the

figure, $i_a$ and $i_b$ represent the order of interleaved symbols in streams A and B, $j_a$ and $j_b$ represent the bit positions ($j_a$, $j_b$=1,...,h) in the modulation scheme, $\pi_a$ and $\pi_b$ represent the interleavers for streams A and B, and, $\Omega^a_{ia,ja}$ and $\Omega^b_{ib,jb}$ represent the order of data in streams A and B before interleaving. FIG.3 shows frame configurations where $i_a$=$i_b$. Here, ($i_a$,$j_a$) and ($i_b$,$j_b$) are represented as the following equations.

[ 1 6 ]

$$(i_a, j_a) = \pi_a(\Omega^a_{ia,ja}) \qquad \ldots (\text{Equation } 16)$$

[ 1 7 ]

$$(i_b, j_b) = \pi_b(\Omega^a_{ib,jb}) \qquad \ldots (\text{Equation } 17)$$

(3-2) The iterative decoding

Here, the algorithms of sum-product decoding and MIMO signal iterative detection, which the receiving apparatus uses upon decoding LDPC codes, will be described in detail.

(3-2-1) The sum-product decoding

Assume that two dimensional (M×N) matrix H = {$H_{mn}$} is the parity check matrix for LDPC codes of the decoding target. Subsets A(m) and B(n) of the set[1,N]={1,2,...,N} are defined as the following equations.

[ 1 8 ]

$$A(m) \equiv \{n : H_{mn} = 1\} \qquad \ldots (\text{Equation } 18)$$

[ 1 9 ]

$$B(n) \equiv \{m : H_{mn} = 1\} \qquad \ldots (\text{Equation } 19)$$

A(m) represents the set of column indices of 1's in the m-th row of parity check matrix H, and B(n) represents the set of row indices of 1's in the n-th row of parity check matrix H. The algorithm of sum-product decoding is as follows.
·Step A·1 initialization): letting a priori value logarithmic ratio $\beta_{mn}$=0 for all combinations (m, n) satisfying $H_{mn}$=1. Assume that the loop variable (the number of iterations) $l_{sum}$=1 and the maximum number of loops is set in $l_{sum,max}$.
·Step A·2 (row processing): the extrinsic value logarithmic ratio $\alpha_{mn}$ is updated for all combinations (m,n) satisfying $H_{mn}$=1 in the order of m= 1 , 2, ... and M, using following updating equations 20, 21 and 22.

[ 2 0 ]

$$\alpha_{mn} = \left( \prod_{n' \in A(m)\backslash n} sign(\beta_{mn'}) \right) \times f\left( \sum_{n' \in A(m)\backslash n} f(|\beta_{mn'}|) \right) \qquad \ldots (\text{Equation } 20)$$

[21]

$$sign(x) \equiv \begin{cases} 1 & x \geq 0 \\ -1 & x < 0 \end{cases} \quad \ldots (Equation\ 21)$$

[22]

$$f(x) \equiv \ln \frac{\exp(x)+1}{\exp(x)-1} \quad \ldots (Equation\ 22)$$

In the above equations, f represents Gallager function. Further, the method of finding $\lambda_n$ will be described later.

·Step A·3 (column process): the extrinsic value-log ratio $\beta_{mn}$ is updated for all combinations (m,n) satisfying $H_{mn}=1$ in the order of n=1, 2, ... and N, using the following updating equation.

[23]

$$\beta_{mn} = \lambda_n + \sum_{m' \in B(n) \setminus m} \alpha_{m'n} \quad \ldots (Equation\ 23)$$

·Step A·4 (calculating a log-likelihood ratio): log-likelihood ratio $L_n$ is found for $n \in [1,N]$ as the following equation.

[24]

$$L_n = \lambda_n + \sum_{m' \in B(n)} \alpha_{m'n} \quad \ldots (Equation\ 24)$$

·Step A·5 (count of the number of iterations): if $I_{sum} < I_{sum,maxm}$ $I_{sum}$ is incremented, and step A·2 is returned to. If $I_{sum} = I_{sum,max}$, the sum-product decoding in this round is finished.

The operations in one sum-product decoding have been described above. After that, MIMO signal iterative detection is performed. In the variables m, n, $\alpha_{mn}$, $\beta_{mn}$, $\lambda_n$ and $L_n$, used in the above description of the operations of sum-product decoding, the variables in stream A are $m_a$, $n_a$, $\alpha^a_{mana}$, $\beta^a_{mana}$, $\lambda_{na}$ and $L_{na}$ and the variables in stream B are $m_b$, $n_b$, $\alpha^b_{mbnb}$, $\beta^b_{mbnb}$, $\lambda_{nb}$ and $L_{nb}$.

(3-2-2) The MIMO signal iterative detection

Here, the method of finding $\lambda_n$ in MIMO signal iterative detection will be described in detail. The following equation holds from equation 1.

[25]

$$\mathbf{y}(t) = \big(y_1(t), y_2(t)\big)^T \quad \ldots (Equation\ 25)$$
$$= \mathbf{H}_{22}(t)\mathbf{s}(t) + \mathbf{n}(t)$$

The following equations are defined from the frame configurations of FIG.3 and equations 17 and 18.

[26]

$$n_a = \Omega^a_{ia,ja} \qquad \dots(\text{Equation 26})$$

[27]

$$n_b = \Omega^b_{ib,jb} \qquad \dots(\text{Equation 27})$$

In this case, $n_a$, $n_b \in [1, N]$. Hereinafter, $\lambda_{na}$, $L_{na}$, $\lambda_{nb}$ and $L_{nb}$ where the number of iterations a MIMO signal is iteratively detected is k, are represented as $\lambda_{k,na}$, $L_{k,na}$, $\lambda_{k,nb}$ and $L_{k,nb}$.

·Step B·1 (initial detection: k=0) : $\lambda_{0,na}$ and $\lambda_{0,nb}$ are found as follows in the case of initial detection.In iterative APP decoding:

[28]

$$\lambda_{0,n_X} = \ln \frac{\sum_{U_{0,n_X,+1}} \exp\left\{-\frac{1}{2\sigma^2}\|\mathbf{y}(i_X) - \mathbf{H}_{22}(i_X)\mathbf{s}(\mathbf{u}(i_X))\|^2\right\}}{\sum_{U_{0,n_X,-1}} \exp\left\{-\frac{1}{2\sigma^2}\|\mathbf{y}(i_X) - \mathbf{H}_{22}(i_X)\mathbf{s}(\mathbf{u}(i_X))\|^2\right\}}$$

$$\dots(\text{Equation 28})$$

In iterative max-log APP decoding:

[29]

$$\lambda_{0,n_X} = \max_{U_{0,n_X,+1}}\left\{\Psi(\mathbf{u}(i_X),\mathbf{y}(i_X))\right\} - \max_{U_{0,n_X,-1}}\left\{\Psi(\mathbf{u}(i_X),\mathbf{y}(i_X))\right\} \qquad \dots(\text{Equation 29})$$

[30]

$$\Psi(\mathbf{u}(i_X),\mathbf{y}(i_X)) = -\frac{1}{2\sigma^2}\|\mathbf{y}(i_X) - \mathbf{H}_{22}(i_X)\mathbf{s}(\mathbf{u}(i_X))\|^2 \qquad \dots(\text{Equation 30})$$

where X=a,b. Then, assume that the number of iterations a MIMO signal is iteratively detected is $I_{mimo}=0$ and the maximum number of iterations is set in $I_{mimo,max}$.

·Step B·2 (iterative detection: the number of iterations k): $\lambda_{k,na}$ and $\lambda_{k,nb}$ where the number of iterations is k, are represented as following equations 31 to 34, from equations 11, 13 to 15, 26 and 27. where (X, Y) = (a, b)(b, a).

In iterative APP decoding:

[ 3 1 ]

$$\lambda_{k,n_X} = -L_{k-1,\Omega^X_{iX,jX}}(u_{\Omega^X_{iX,jX}})$$

$$+ \ln \frac{\sum_{U_{k,n_X+1}} \exp\left\{-\frac{1}{2\sigma^2}\left\|\mathbf{y}(i_X)-\mathbf{H}_{22}(i_X)\mathbf{s}(\mathbf{u}(i_X))\right\|^2 + \rho(u_{\Omega^X_{iX,jX}})\right\}}{\sum_{U_{k,n_X-1}} \exp\left\{-\frac{1}{2\sigma^2}\left\|\mathbf{y}(i_X)-\mathbf{H}_{22}(i_X)\mathbf{s}(\mathbf{u}(i_X))\right\|^2 + \rho(u_{\Omega^X_{iX,jX}})\right\}}$$

$$... (\mathrm{Equation}\ 31)$$

[ 3 2 ]

$$\rho(u_{\Omega^X_{iX,jX}}) = \sum_{\gamma=1}^{h} \left|\frac{L_{k-1,\Omega^X_{iX,\gamma}}(u_{\Omega^X_{iX,\gamma}})}{2}\right|\left(u_{\Omega^X_{iX,\gamma}}, sign(L_{k-1,\Omega^X_{iX,\gamma}}(u_{\Omega^X_{iX,\gamma}}))\right)$$

$$+ \sum_{\gamma=1}^{h} \left|\frac{L_{k-1,\Omega^Y_{iX,\gamma}}(u_{\Omega^Y_{iX,\gamma}})}{2}\right|\left(u_{\Omega^Y_{iX,\gamma}}, sign(L_{k-1,\Omega^Y_{iX,\gamma}}(u_{\Omega^Y_{iX,\gamma}}))\right)$$

$$... (\mathrm{Equation}\ 32)$$

In iterative max-log APP decoding:

[ 3 3 ]

$$\lambda_{k,n_X} = -L_{k-1,\Omega^X_{iX,jX}}(u_{\Omega^X_{iX,jX}}) + \max_{U_{k,n_X+1}}\left\{\Psi\left(\mathbf{u}(i_X), \mathbf{y}(i_X), \rho(u_{\Omega^X_{iX,jX}})\right)\right\}$$

$$- \max_{U_{k,n_X-1}}\left\{\Psi\left(\mathbf{u}(i_X), \mathbf{y}(i_X), \rho(u_{\Omega^X_{iX,jX}})\right)\right\}$$

$$... (\mathrm{Equation}\ 33)$$

[ 3 4 ]

$$\Psi\left(\mathbf{u}(i_X), \mathbf{y}(i_X), \rho(u_{\Omega^X_{iX,jX}})\right) = -\frac{1}{2\sigma^2}\left\|\mathbf{y}(i_X)-\mathbf{H}_{22}(i_X)\mathbf{s}(\mathbf{u}(i_X))\right\|^2 + \rho(u_{\Omega^X_{iX,jX}})$$

$$... (\mathrm{Equation}\ 34)$$

·Step B·3 (counting the number of iterations and estimating a codeword): incrementing $I_{mimo}$ if $I_{mimo} < I_{mimo,max}$, and returning to step B·2. Assume that $I_{mimo} = I_{mimo,max}$, the estimated codeword is found as the following equation, where X=a, b.

[ 3 5 ]

$$\hat{u}_{n_X} = \begin{cases} 1 & L_{l_{mimo},n_X} \geq 0 \\ -1 & L_{l_{mimo},n_X} < 0 \end{cases} \quad \dots (\text{Equation } 35)$$

(4) The examination using factor graphs

Here, factor graphs are illustrated in cases where the interleaving patterns of stream A and stream B are the same (SIP: Same Interleave Pattern) and different (VIP: Varying Interleave Pattern), and the effect of using VIP as the present embodiment will be examined.

(4-1) SIP (Same Interleave Pattern)

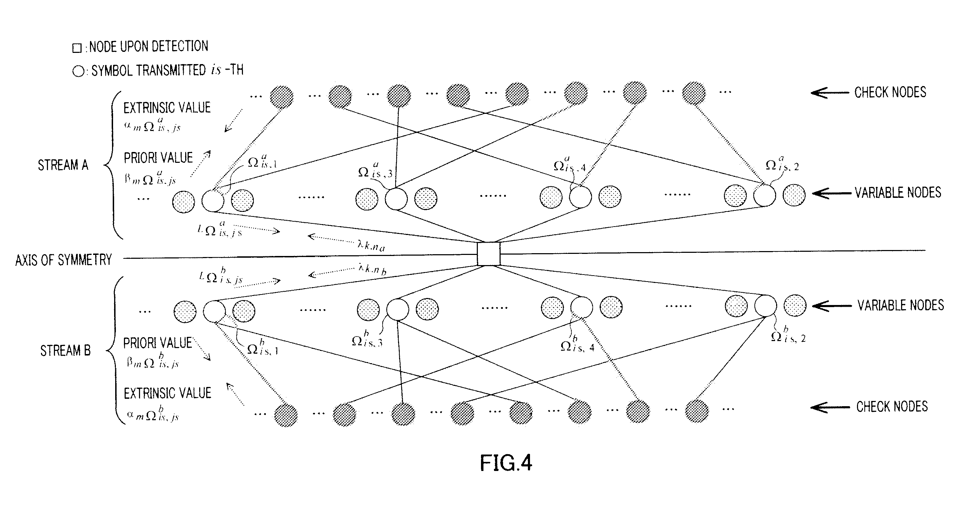

In the above system model, FIG.4 shows a factor graph as an example where the modulation scheme is 16 QAM and the interleaving patterns of stream A and stream B are the same. In this case, if a relational equation of the following equation

[ 3 6 ]

$$n_a(=\Omega^a_{ia,ja}) = n_b(=\Omega^b_{ib,jb}) \quad \dots (\text{Equation } 36)$$

holds, a relational equation of the following equation holds.

[ 3 7 ]

$$(i_a, j_a) = (i_b, j_b) = (i_s, j_s) \quad \dots (\text{Equation } 37)$$

LDPC codes for stream A and B are the same, so that the nodes and edges are symmetric with respect to an axis of symmetry as shown in FIG.4. When SIP is adopted, equation 37 holds between $(i_a, j_a)$ corresponding to variable nodes of stream A and $(i_b, j_b)$ corresponding to variable nodes of stream B, which are symmetric with respect to an axis of symmetry.

As can be seen from FIG.4 and equations 31 to 34, if the number of iterations is k, $L_{k-1,\Omega^a_{ia,\gamma}}$ ($\gamma \neq j_a$, $\gamma = 1, \dots, h$) from stream A and $L_{k-1,\Omega^b_{ib,\gamma}}$ ($\gamma = 1, \dots, h$) from stream B, which are propagated to a variable node corresponding to $n_a$ of stream A, are symbols of the same time (i.e. $i_a = i_b = i_s$), and therefore the influence of channel matrix $H_{22}$ ($i_s$) is large. That is, since only limited time influence is received, it is likely that time and space diversity gain of stream A becomes small. The same applies to stream B. However, in $L_{k-1,\Omega^a_{ia,\gamma}}$, $L_{k-1,\Omega^b_{ib,\gamma}}$, influence of a node of a position at which there is 1 in parity check matrix H is also received through calculation of $\alpha_{mn}$ and $\beta_{mn}$ by means of sum-product decoding, and a stream A node and stream B node that provide that influence are symbols of the same time and at the same bit position in the modulation method (incidentally, there are a plurality of 1s in parity check matrix H, so that a plurality of these nodes exist). Consequently, it is likely that a space and time diversity gain becomes small for both stream A and stream B because only limited time influence is received.

(4-2) VIP (Varying Interleaving Pattern)

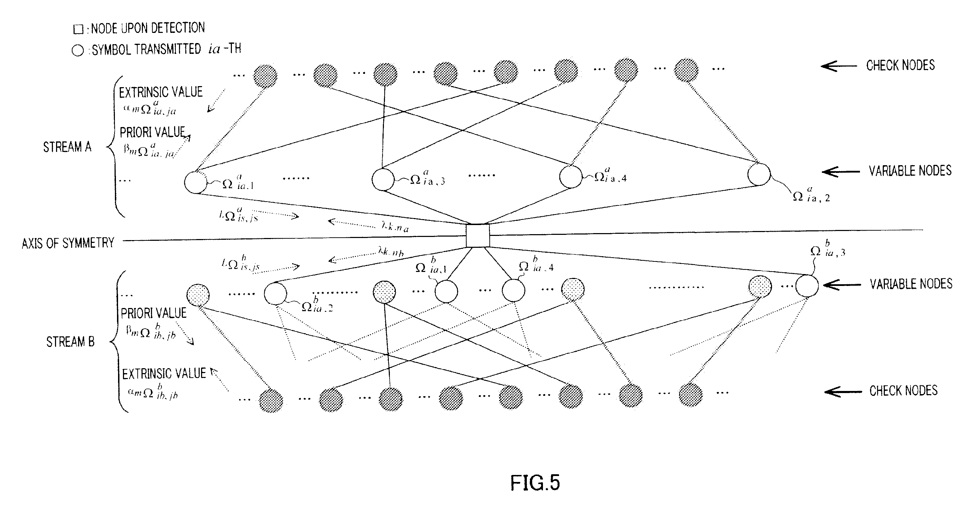

FIG.5 shows an example of a factor graph where the modulation scheme is 16 QAM (i.e. h=4) and the interleaving patterns of stream A and stream B are different in the above model. The nodes and edges in FIG.5 are symmetric with respect to an axis of symmetry in part of sum-product decoding. However, the edges related to MIMO signal iterative detection are not symmetric with respect to an axis of symmetry.

As shown in FIG. 5, if the number of iterations is k, $L_{k-1, \Omega_{ia,\gamma}^a}$ ($\gamma \neq j_a$, $\gamma=1,...,$ h) from stream A, and

$L_{k-1, \Omega_{ib,\gamma}^b}$ ($\gamma=1,...,$ h) from stream B, which are propagated to variable node corresponding to $n_a$ of stream A,

are represent by $L_{k-1, \Omega_{ia,\gamma}^a}$ and $L_{k-1, \Omega_{ia,\gamma}^b}$ If the number of iterations is k, $L_{k-1, \Omega_{ia,\gamma}^a}$ ($\gamma \neq j_a$,

$\gamma=1,...,$ h) from stream A, and $L_{k-1, \Omega_{ib,\gamma}^b}$ ($\gamma=1,...,$h) from stream B, which are propagated to a variable node

corresponding to $n_a$ of stream A, are symbols of the same time (i.e. $i_a = i_b = i_s$), and therefore the influence of channel matrix $H_{22}$ ($i_s$) is large. That is, since only limited time influence is received, it is likely that time and space diversity gain of stream A becomes small. The same applies to stream B. This point is the same as when SIP is performed. However, in $L_{k-1, \Omega_{ia,\gamma}^a}$ , $L_{k-1, \Omega_{ib,\gamma}^b}$ , influence of a node of a position at which there is 1 in parity check matrix H is also received through calculation of $\alpha_{mn}$ and $\beta_{mn}$ by means of sum-product decoding. Most of nodes of stream A and stream B providing that influence have lost symmetry, and therefore symbols of different times and at different bit positions in the modulation scheme. Consequently, in sum-product decoding, it is more likely to receive influence of many times than when SIP is used. By this means, in stream A, it is possible to improve time and space diversity gain. The same applies to stream B.

As described above, by making the interleaving patterns of stream A and stream B different, it is possible to improve received quality when LDPC coding is performed. Although a case have been explained with the above examples where LDPC coding is performed, the embodiment is not limited to this, and, that is, when the above-described iterative decoding is performed, as long as interleaving processing is conducted using different interleaving patterns between the streams, it is possible to improve received quality as in the above-described examples.

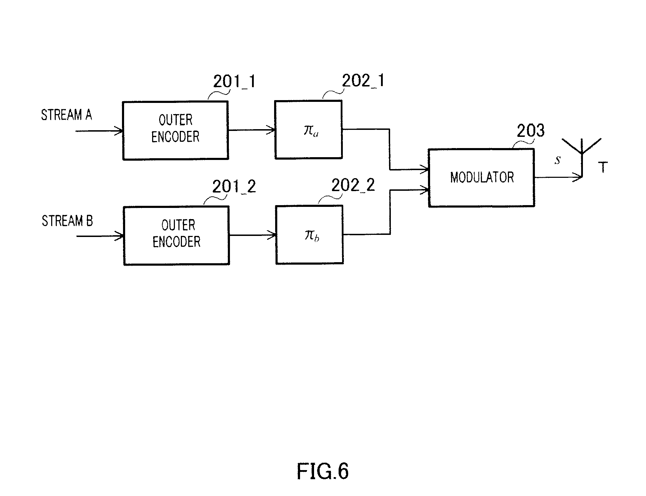

Although a case have been explained with the above examples where interleaving processing is performed using different interleaving patterns between streams in a communication scheme using MIMO scheme, the embodiment is not limited to this, and, like in FIG.6 where the same reference numerals are assigned to corresponding parts as in FIG.2A, the same effect can be obtained to a communication scheme for transmitting a plurality of signal streams from a single antenna.

(5) The method and configuration of interleaving of the present embodiment

By the way, when different interleaving patterns are adopted as described above, only the part related to sum-product decoding improves time (or frequency) diversity gain and space diversity gain, and diversity gain in detection (white square in FIGs.4 and 5) does not improve. The inventors of the present invention have considered this issue and focused on the fact that, if it is possible to realize the method of improving diversity gain in detection and the method of improving diversity gain in sum-product decoding, received quality of data further improves. Then, the inventors have achieved the present invention through this consideration.

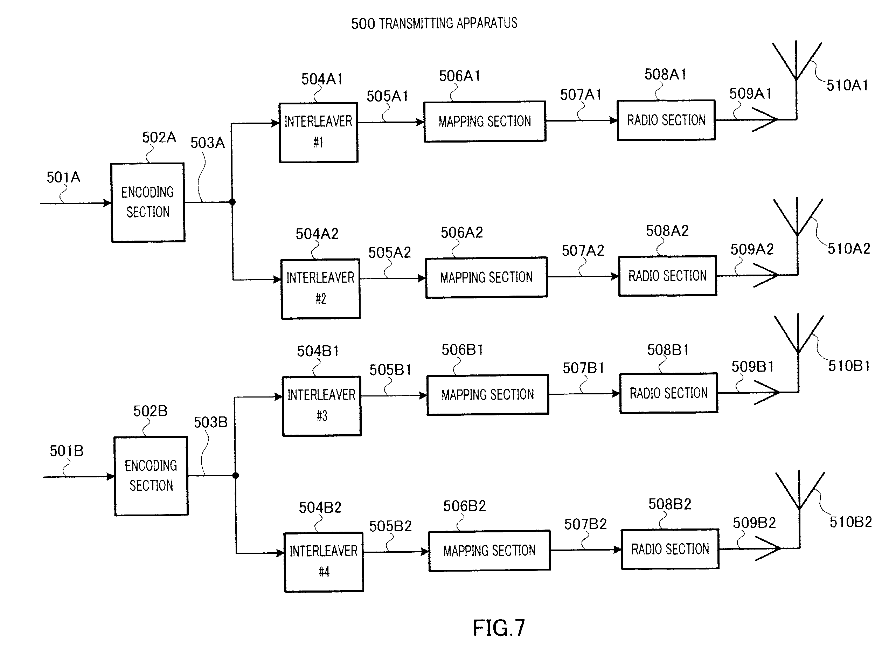

FIG.7 is a configuration example of the transmitting apparatus of the present embodiment. Transmitting apparatus 500 inputs data 501A to encoding section 502A and data 501B to encoding section 502B.

Encoding section 502A encodes, for example, performs convolutional coding, LDPC (Low-Density Parity-Check) coding or turbo coding, data 501A and outputs the encoded data 503A to interleaver #1 (504 A1) and interleaver #2 (504 A2).

Interleavers #1 and #2 interleave encoded data 503A, that is, arrange order of the data, and output interleaved data 505A1 and 505 A2 to mapping sections 506 A1 and 506 A2.

Mapping sections 506 A1 and 506 A2 modulate including QPSK (Quadrature Phase Shift Keying), 16QAM (16 Quadrature Amplitude Modulation) or 64QAM (64 Quadrature Amplitude Modulation) modulation, interleaved data 505 A1 and 505 A2, and output the resulting baseband signals 507 A1 and 507 A2 to radio sections 508 A1 and 508 A2.

Radio sections 508 A1 and 508 A2 perform processing including quadrature modulation, band limitation, frequency conversion and amplification, and output the resulting transmission signals 509 A1 and 509 A2 to antennas 510 A1 and 510 A2.

The operations of encoding section 502B, interleavers #3 (504 B1) and #4 (504 B2), mapping sections 506 B1 and 506 B2, and radio sections 508 B1 and 508 B2 are the same as the operations of encoding section 502A, interleavers #1 (504 A1) and #2 (504 A2), mapping sections 506 A1 and 506 A2, and radio sections 508 A1 and 508 A2, and therefore the explanation thereof is omitted.

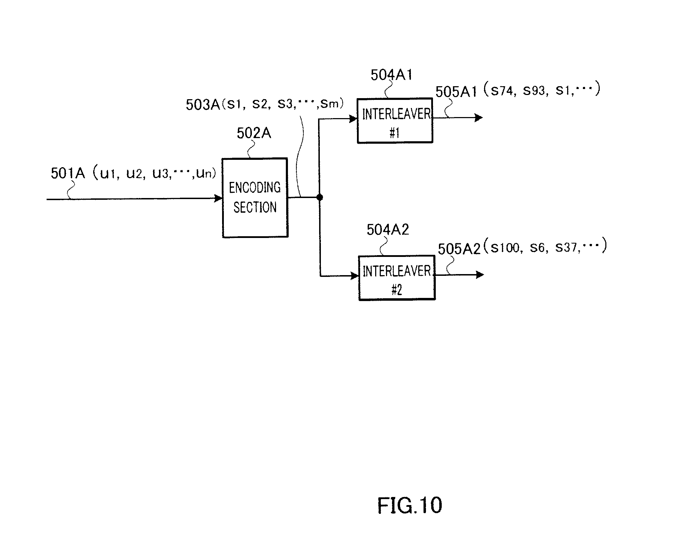

The relationships between 502A and 502B, and interleavers #1 to #4 will be explained in detail later using FIG.10.

The most characteristic part of transmitting apparatus 500 is that interleaving patterns are different between interleavers #1 to #4. The advantage of this will be described later in detail.

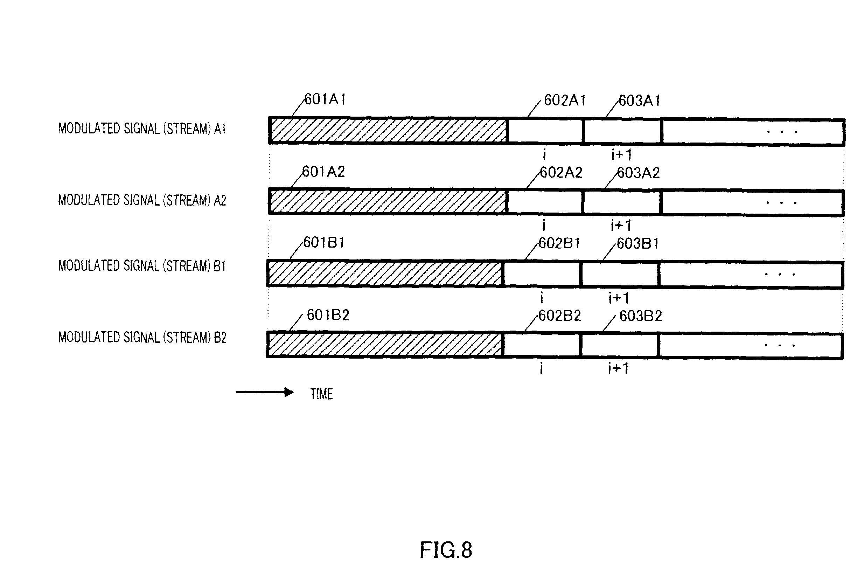

FIG.8 shows a configuration example of transmission frames of transmitting apparatus 500. Transmitting apparatus 500 transmits modulated signal (stream) A1 of the frame configuration in FIG.8 from antenna 510 A1. Similarly, transmitting apparatus 500 transmits modulated signal (stream) A2 from antenna 510 A2, modulated signal (stream) B1 from antenna 510 B1, modulated signal (stream) B2 from antenna 510 B2.

Symbols of the same time in modulated signals (streams) A1, A2, B1 and B2 use the same frequency, and the symbols are transmitted from different antennas. Reference numerals 601 A1, 601 A2, 601 B1 and 601 B2 in the figure denote pilot symbol groups (preambles) to estimate channel condition in the receiving apparatus. Reference numerals 601 A1, 601 A2, 601 B1 and 601 B2 in the figure denote data symbols transmitted at time i and reference numerals 603 A1, 603 A2, 603 B1 and 603 B2 denote data symbols transmitted at time i+1.

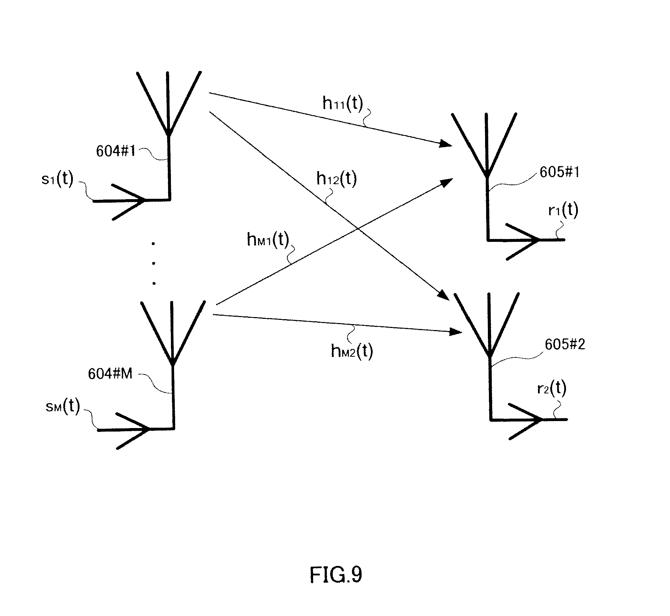

Here, the relationships between transmit and receive antennas in a communication scheme using a MIMO system are simply explained using FIG.9. The transmission signals transmitted from transmit antennas 604 #1 to 604 #M (where M=1, 2, 3 and 4) are $s_1(t)$ to $s_M(t)$. Further, the received signals received in receive antennas 605 #1 and 605 #2 are $r_1(t)$ and $r_2(t)$. Then, the following relational equations hold.

[ 3 8 ]

$$r_1(t) = \sum_{i=1}^{4} h_{1i}(t) s_i(t) + n_1(t) \qquad \dots (\mathrm{Equation}\ 38)$$

[ 3 9 ]

$$r_2(t) = \sum_{i=1}^{4} h_{2i}(t) s_i(t) + n_2(t) \qquad \dots (\mathrm{Equation}\ 39)$$

In equations 38 and 39, $h_{1i}(t)$ represents channel condition between transmit antenna #i and receive antenna #1, $h_{2i}(t)$ represents channel condition between transmit antenna #i and receive antenna #2, n1(t) and n2(t) represent noise, and t represents time. The receiving apparatus estimates $h_{1i}(t)$ and $h_{2i}(t)$ using pilot symbol groups 601 A1, 601 A2, 601 B1 and 601 B2 for estimating channel conditions.

FIG.10 provides an explanation for detailed operations of encoding sections 502A and 502B and interleavers #1 to #4 in transmitting apparatus 500 in FIG.7. FIG.10 shows an example of encoding section 502A and interleavers #1 and #2 as representative of the encoding sections and the interleavers.

Encoding section 502A inputs data, for example, u 1, u2, u3, ... and un, and outputs encoded data s1, s2, s3 ... and sm (n<m) to interleavers #1 (504 A1) and #2 (504 A2).

Interleaver #1 interleaves the order of the encoded data s1, s2, s3, ... and sm, and outputs the data in the order of s74, s93, s1,..., as interleaved data 505 A1.

Interleaver #2 interleaves the order of the encoded data s1, s2, s3, ... and sm, and outputs the data in the order of s100, s6, s37,..., as interleaved data 505 A2.

Here, it is important that interleaver #1 and interleaver #2 receive the same data as input and output data in different orders. The advantage will be described later in detail.

The operations of encoding section 502B and interleavers #3 (504 B1) and #4 (504 B2) are the same as above-described encoding section 502A, interleavers #1 (504 A1) and #2 (504 A2), and therefore the explanation thereof is omitted. As described in the beginning of the embodiment, what is particularly important is to make the interleaving patterns of interleavers #1 (504 A1), #2 (504 A2), #3 (504 B1) and #4 (504 B2) different. By this means, it is possible to improve received quality.

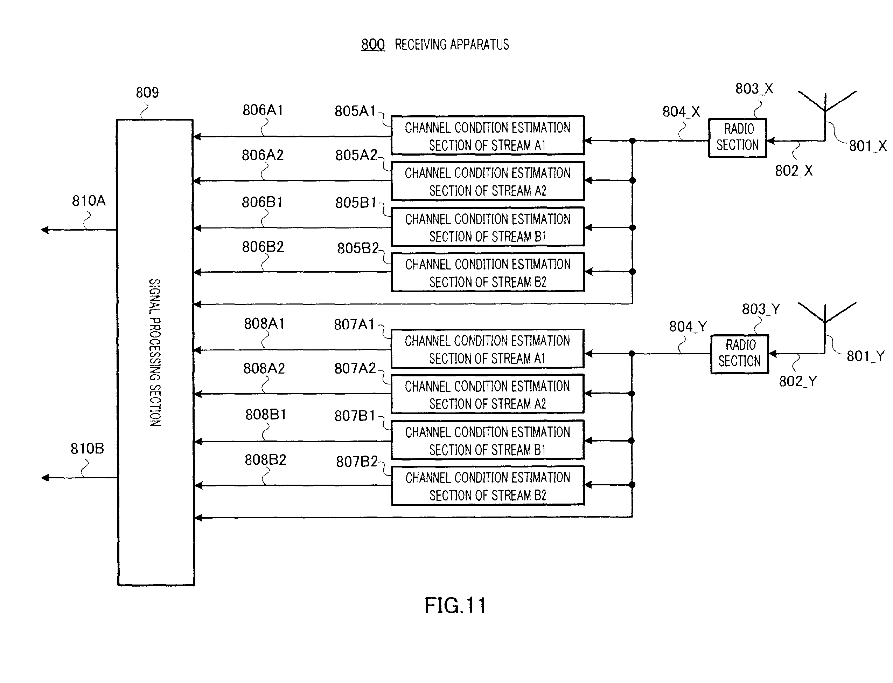

FIG.11 is a configuration example of the receiving apparatus according to the present embodiment. Receiving apparatus 800 receives a signal transmitted from transmitting apparatus 500 via antennas 801_X and 801_Y.

Radio section 803_X performs processing including frequency conversion and quadrature modulation for received signal 802_X received in antenna 801_X, and outputs the resulting baseband signal 804_X to channel condition estimation sections 805 A1, 805 A2, 805 B1 and 805 B2.

Channel condition estimation section 805 A1 extracts pilot symbol group 601 A1 of modulated signal (stream) A1 (FIG.8) included in baseband signal 804_X, estimates channel condition $h_{11}$ of equation 38 based on this, and outputs channel condition $h_{11}$ as channel estimation signal 806 A1.

Channel condition estimation section 805 A2 extracts pilot symbol group 601 A2 of modulated signal (stream) A2 (FIG.8) included in baseband signal 804_X, estimates channel condition $h_{12}$ of equation 38 based on this, and outputs channel condition $h_{12}$ as channel estimation signal 806 A2.

Channel condition estimation section 805 B1 extracts pilot symbol group 601 B1 of modulated signal (stream) B1 (FIG.8) included in baseband signal 804_X, estimates channel condition $h_{13}$ of equation 38 based on this, and outputs channel condition $h_{13}$ as channel estimation signal 806 B1.

Channel condition estimation section 805 B2 extracts pilot symbol group 601 B2 of modulated signal (stream) B2 (FIG.8) included in baseband signal 804_X, estimates channel condition $h_{14}$ of equation 38 based on this, and outputs channel condition $h_{14}$ as channel estimation signal 806 B2.

Radio section 803_Y performs processing including frequency conversion and quadrature modulation for received signal 802_Y received in antenna 801_Y, and outputs resulting baseband signal 804_Y to channel condition estimation sections 807 A1, 807 A2, 807 B1 and 807 B2.

Channel condition estimation section 807 A1 extracts pilot symbol group 601 A1 of modulated signal (stream) A1 (FIG.8) included in baseband signal 804_Y, estimates channel condition $h_{21}$ of equation 39 based on this, and outputs this as channel estimation signal 808 A1.

Channel condition estimation section 807 A2 extracts pilot symbol group 601 A2 of modulated signal (stream) A2 (FIG.8) included in baseband signal 804_Y, estimates channel condition $h_{22}$ of equation 39 based on this, and outputs channel condition $h_{22}$ as channel estimation signal 808 A2.

Channel condition estimation section 807 B1 extracts pilot symbol group 601 B1 of modulated signal (stream) B1 (FIG.8) included in baseband signal 804_Y, estimates channel condition $h_{23}$ of equation 39 based on this, and outputs channel condition $h_{23}$ as channel estimation signal 808 B1.

Channel condition estimation section 807 B2 extracts pilot symbol group 601 B2 of modulated signal (stream) B2 (FIG.8) included in baseband signal 804_Y, estimates channel condition $h_{24}$ of equation 39 based on this, and outputs channel condition $h_{24}$ as channel estimation signal 808 B2.

Signal processing section 809 receives baseband signals 804_X and 804_Y and channel estimation signals 806 A1, 806 A2, 806 B1, 806 B2, 808 A1, 808 A2, 808 B1 and 808 B2 as input, and detects and decodes them, to acquire received data 810A and 810B.

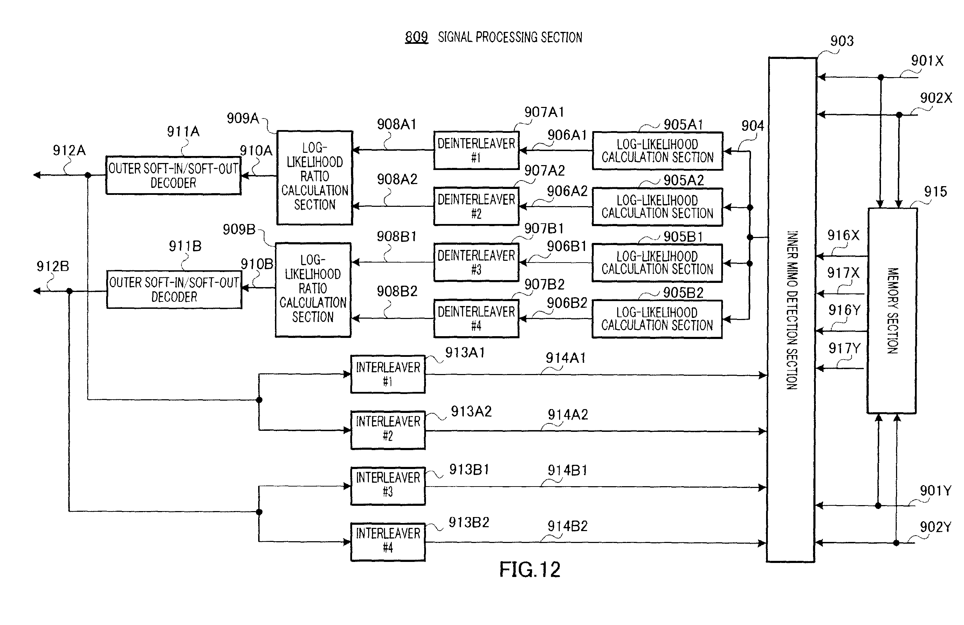

Next, signal processing section 809 in FIG.11 will be explained in detail. FIG.12 shows a configuration example of signal processing section 809. Signal processing section 809 of FIG.12 has inner MIMO detection section 903 and soft-in/soft-out decoder 911. The method of iterative decoding using the inner MIMO detection section and the soft-in/soft-out decoder is explained in detail in Non-Patent Documents 1, 3 and 6, for example. Although, in the configuration in FIG.12, the same processing is carried out as the processing shown in these documents, signal processing section 809 in FIG.12 has a unique configuration that supports the transmission method of the present invention. Signal processing section 809 will be described in detail as follows including the configurations.

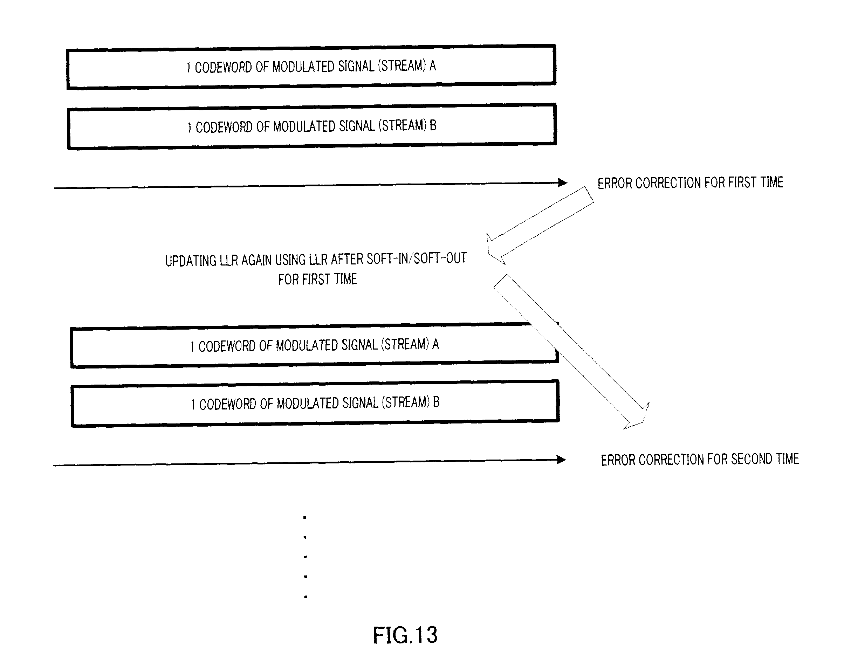

To perform iterative decoding (iterative detection), signal processing section 809 in FIG.12 needs to perform processing as shown in FIG.13. First, signal processing section 809 decodes one codeword (or one frame) of modulated signal (stream) A and one codeword (or one frame) of modulated signal (stream) B. As a result, log-likelihood ratios (LLRs) for bits of 1 codeword (or one frame) of modulated signal (stream) A and for bits of 1 codeword (or one frame) of modulated signal (stream) B are obtained from soft-in/soft-out decoders 911A and 911B. Next, detection and decoding are performed again using the LLRs. This operation is carried out a number of times (this operation is called "iterative decoding (iterative detection)." Now, the method of creating log-likelihood ratio (LLR) for a symbol of a specific time in one frame, will be mainly explained.

In FIG.12, memory section 915 receives as input baseband signal 901X (corresponding to baseband signal 804_X in FIG.11) channel estimation signal group 902X (corresponding to channel estimation signals 806 A1, 806 A2, 806 B1, 806 B2 in FIG.11), baseband signal 901Y (corresponding to baseband signal 804_Y in FIG.11), and channel estimation signal group 902Y (corresponding to channel estimation signals 808 A1, 808 A2, 808 B1 and 808 B2 in FIG. 11), and stores these input signals, in order to realize iterative decoding (iterative detection). When required, memory section 915 outputs the stored signals as baseband signal 916_X, channel estimation signal group 917X, baseband signal 916_Y and channel estimation signal group 917Y.

The following operations will be described by separating the case of initial detection and the case of iterative decoding (iterative detection).

<The initial detection>

Inner MIMO detection section 903 receives baseband signal 901X, channel estimation signal group 902X, baseband signal 901Y and channel estimation signal group 902Y as input. Here, cases will be explained as an example where QPSK modulation scheme is applied to modulated signal (stream) A1, modulated signal (stream) A2, modulated signal (stream) B1 and modulated signal (stream) B2.

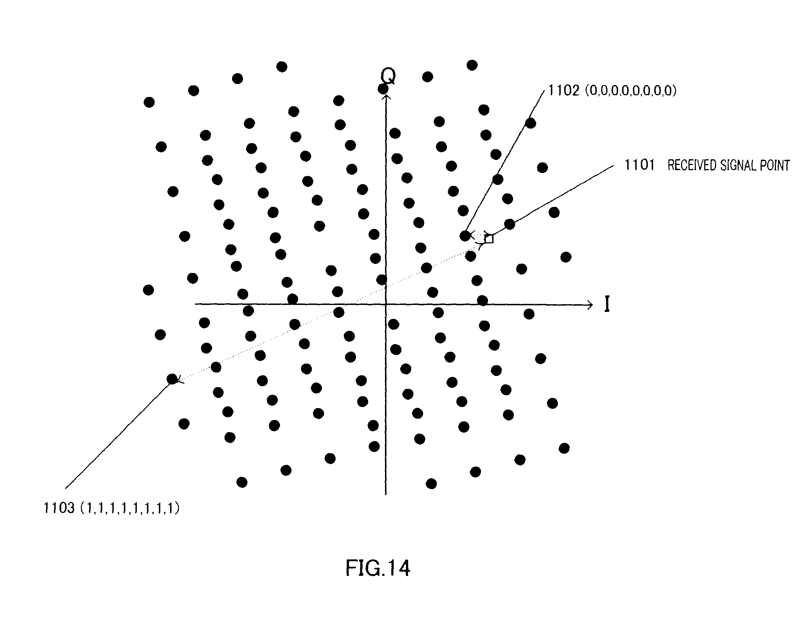

Inner MIMO detection section 903 first finds candidate signal points from channel estimation signal group 902X. FIG.14 shows the situation at that time. In FIG.14, the black dots shows candidate signal points. The modulation scheme is QPSK, and there are 256 candidate signal points. However, FIG.14 shows an image, and all the 256 candidate signal points are not shown.

Here, if two bits transmitted in modulated signal A1 are b0 and b1, two bits transmitted in modulated signal A2 are b2 and b3, two bits transmitted in modulated signal B1 are b4 and b5, and two bits transmitted in modulated signal B2 are b6 and b7, there are candidate signal points corresponding to (b0, b1, b2, b3, b4, b5, b6, b7) in FIG.14.

Inner MIMO detection section 903 finds square Euclidean distances between received signal point 1101 (corresponding to baseband signal 901X) and the individual candidate signal points. Then, the square Euclidean distances are divided by noise variance $\sigma^2$. That is, inner MIMO detection section 903 finds value Ex(b0, b1, b2, b3, b4, b5, b6, b7) by dividing the square Euclidean distances between candidate signal points corresponding to (b0, b1, b2, b3, b4, b5, b6, b7) and the received signal point by noise variance.

Similarly, inner MIMO detection section 903 finds candidate signal points from channel estimation signal group 902Y, finds square Euclidean distances between the individual candidate signal point and a received signal point (corresponding to baseband signal 901Y) and divides these square Euclidean distances by noise variance $\sigma^2$. That is, inner MIMO detection section 903 finds value $E_Y$(b0, b1, b2, b3, b4, b5, b6, b7) by dividing the square Euclidean distances between candidate signal points corresponding to (b0, b1, b2, b3, b4, b5, b6, b7) and the received signal point by noise variance.

Then, inner MIMO detection section 903 finds $E_X$(b0, b1, b2, b3, b4, b5, b6, b7) + $E_Y$(b0, b1, b2, b3, b4, b5, b6, b7) = E(b0, b1, b2, b3, b4, b5, b6, b7). Inner MIMO detection section 903 outputs E(b0, b1, b2, b3, b4, b5, b6, b7) as signal 904.

Log-likelihood calculation section 905 A1 calculates log likelihoods of bits b0 and b1 from signal 904 and outputs log-likelihood signal 906 A1. When calculating log likelihoods, a log likelihood in case of "1" and a log likelihood in case of "0" are calculated. The calculation method is shown in equations 28, 29 and 30, and the details are shown in, for example, Non-Patent Documents 1, 3 and 6.

Similarly, log-likelihood calculation section 905 A2 calculates log likelihoods for bits b2 and b3 from signal 904 and outputs log-likelihood signal 906 A2. Similarly, log-likelihood calculation section 905 B1 calculates log likelihoods for bits b4 and b5 from signal 904 and outputs log-likelihood signal 906 B1. Similarly, log-likelihood calculation section 905 B2 calculates log likelihoods for bits b6 and b7 from signal 904 and outputs log-likelihood signal 906 B2.

Deinterleaver #1 (907 A1) receives log-likelihood signal 906 A1 as input and performs deinterleaving, which corresponds to interleaver #1 (504 A1) (FIG.7), on this signal, and outputs deinterleaved log-likelihood signal 908 A1. Similarly, deinterleaver #2 (907 A2) receives log-likelihood signal 906 A2 as input and performs deinterleaving, which corresponds to interleaver #2 (504 A2) (FIG.7), on this signal, and outputs deinterleaved log-likelihood signal 908 A2.

Similarly, deinterleaver #3 (907 B1) receives log-likelihood signal 906 B1 as input and performs deinterleaving, which corresponds to interleaver #3 (504 B1) (FIG.7), on this signal, and outputs deinterleaved log-likelihood signal 908 B1. Similarly, deinterleaver #4 (907 B2) receives log-likelihood signal 906 B2 as input and performs deinterleaving, which corresponds to interleaver #4 (504 B2) (FIG.7), on this signal, and outputs deinterleaved log-likelihood signal 908 B2.

Log-likelihood ratio calculation section 909A receives deinterleaved log-likelihood signals 908 A1 and 908 A2 as input, calculates log-likelihood ratios (LLRs) for bits encoded in encoding section 502A in FIG.7 based on these signals, and outputs log-likelihood ratio signal 910A. Similarly, log-likelihood ratio calculation section 909A receives deinterleaved log-likelihood signals 908 B1 and 908 B2 as input, calculates the log-likelihood ratios (LLRs) for bits encoded in encoding section 502B in FIG.7 based on these signals, and outputs log-likelihood ratio signal 910B.

Soft-in/soft-out decoder 911A receives log-likelihood ratio signal 910A as input, decodes this signal and outputs decoded log-likelihood ratios 912A. Similarly, soft-in/soft-out decoder 911B receives log-likelihood ratio signal 910B as input, decodes this signal and outputs decoded log-likelihood ratios 912B.

<The iterative decoding (iterative detection), the number of iterations k>

Interleaver #1 (913 A1) inputs decoded log-likelihood ratio 912A acquired on k-1th soft-in/soft-out decoding, interleaves this, and outputs interleaved log-likelihood ratio 914 A1. Here, the interleaving pattern in interleaver #1 (913 A1) is the same as the interleaving pattern in interleaver #1 (504 A1) in FIG.7.

Interleaver #1 (913 A2) inputs decoded log-likelihood ratio 912A acquired by k-1th soft-in/soft-out decoding, interleaves this, and outputs interleaved log-likelihood ratio 914 A2. Here, the interleaving pattern in interleaver #2 (913 A2) is the same as the interleaving pattern in interleaver #2 (504 A2) in FIG.7.

Interleaver #1 (913 B1) inputs decoded log-likelihood ratio 912B acquired by k-1th soft-in/soft-out decoding, interleaves this, and outputs interleaved log-likelihood ratio 914 B1. Here, the interleaving pattern in interleaver #3 (913 B1) is the same as the interleaving pattern in interleaver #3 (504 B1) in FIG.7.

Interleaver #1 (913 B2) inputs decoded log-likelihood ratio 912B acquired by k-1th soft-in/soft-out decoding, interleaves this, and outputs interleaved log-likelihood ratio 914 B2. Here, the interleaving pattern in interleaver #4 (913 B2) is the same as the interleaving pattern in interleaver #4 (504 B2) in FIG.7.

Inner MIMO detection section 903 receives baseband signals 916X and 916Y, channel estimation signal group 917X and 917Y, interleaved log-likelihood ratio 914 A1, 914 A2, 914 B1 and 914 B2 as input. Here, the reason baseband signals 916X and 916Y and channel estimation signal group 917X and 917Y are used instead of baseband signals 901X and 901Y channel estimation signal group 902X and 902Y, is that delay time is produced due to iterative decoding.

The operations of inner MIMO detection section 903 upon iterative decoding differ from the operations upon initial detection in using interleaved log-likelihood ratios 914 A1, 914 A2, 914 B1 and 914 B2 in signal processing.

First, inner MIMO detection section 903 finds candidate signal points from channel estimation signal group 902X, and finds E (b0, b1, b2, b3, b4, b5, b6, b7) similar to the case of initial detection. In addition, inner MIMO detection section 903 finds a coefficient corresponding to equations 11-1 and 32 from interleaved log-likelihood ratios 914 A1, 914 A2, 914 B1 and 914 B2. Then, inner MIMO detection section 903 modifies value E (b0, b1, b2, b3, b4, b5, b6, b7) using this found efficient, finds the modified value E' (b0, b1, b2, b3, b4, b5, b6, b7), and outputs this as signal 904.

Log-likelihood calculation section 905 A1 calculates log likelihoods of bits b0 and b1 from signal 904 and outputs log-likelihood signal 906 A1. When calculating log likelihoods, a log likelihood in case of "1" and a log likelihood in case of "0" are calculated. The calculation method is shown in equations 31, 32, 33, 34 and 35, and the details are shown in, for example, Non-Patent Documents 1, 3 and 6.

Similarly, log-likelihood calculation section 905 A2 calculates log likelihoods for bits b2 and b3 from signal 904 and outputs log-likelihood signal 906 A2. Similarly, log-likelihood calculation section 905 B1 calculates log likelihoods for bits b4 and b5 from signal 904 and outputs log-likelihood signal 906 B1. Similarly, log-likelihood calculation section 905 B2 calculates log likelihoods for bits b6 and b7 from signal 904 and outputs log-likelihood signal 906 B2.

The operations after deinterleavers 907 A1, 907 A2, 907 B1 and 907 B2 are the same as in initial detection.

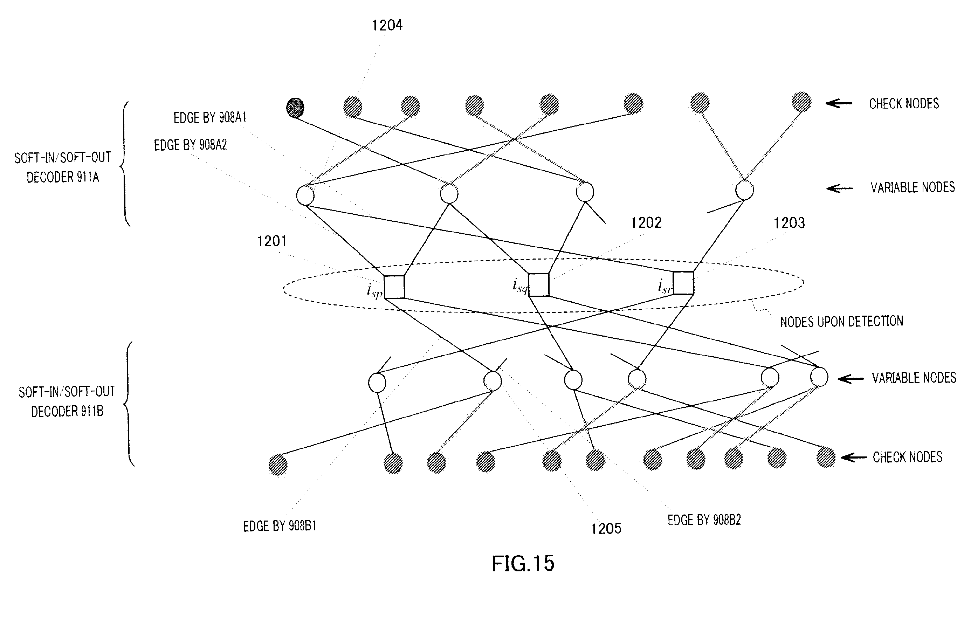

Here, what is important is that log-likelihood ratio calculation sections 909A and 909B in FIG. 12 receive two types of signals as input and calculate log-likelihood ratios. By this means, it is possible to acquire greater diversity gain. The detail will be described later using FIG.15.

In FIG.12, blocks corresponding to adders, placed before deinterleavers 112 and 212 and interleavers 114 and 213 in FIGs.1 and 2, are not illustrated. This is because the parts corresponding to adders are not processed particularly. In FIG.12, identical computing is conducted to computing in FIGs.1 and 2.

FIG.15 is a factor graph where, for example, LPDC coding is employed in encoding sections 502A and 502B in transmitting apparatus 500 in FIG.7, and signal processing section 809 is adopted in FIG.12, and sum-product decoding is performed in soft-in/soft-out decoders 911A and 911B. QPSK modulation is used as an example of the modulation scheme.

FIG.15 shows nodes 1 201, 1202 and 1203 upon detection as well as check nodes and variable nodes. Node 1201 upon detection is the node at time $i$sp, node 1202 upon detection is the node at time $i$sq, and node 1203 upon detection is the node at time $i$sr.

In transmitting apparatus 500 in FIG.7, the interleaving patterns of interleavers #1 to #4 are made different, so that, similar to FIG.5, time (or frequency) diversity and space diversity gain improve in parts related to sum-product decoding.

Additionally, the feature of FIG.15 includes that there are two edges from each variable node to the nodes upon detection. For example, in variable node 1204, there are an edge corresponding to deinterleaved log-likelihood signal 908 A1 and an edge corresponding to deinterleaved log-likelihood signal 908 A2 in FIG.12. Similarly, in variable node 1205, there are an edge corresponding to deinterleaved log-likelihood signal 908 B1 and an edge corresponding to deinterleaved log-likelihood signal 908 B2 in FIG.12.

Although diversity gain does not improve as a disadvantage of detection in FIG.5, by receiving the influence for detection at a plurality of times in FIG.15, diversity gain in detection improves. For example, variable node 1204 receives influence of times $i$sp and $i$sr. Consequently, diversity gain improves in FIG.15 comparing with FIG.5, so that received quality of data improves.

Next, a configuration of the transmitting apparatus different from FIG.7 will be explained in detail.

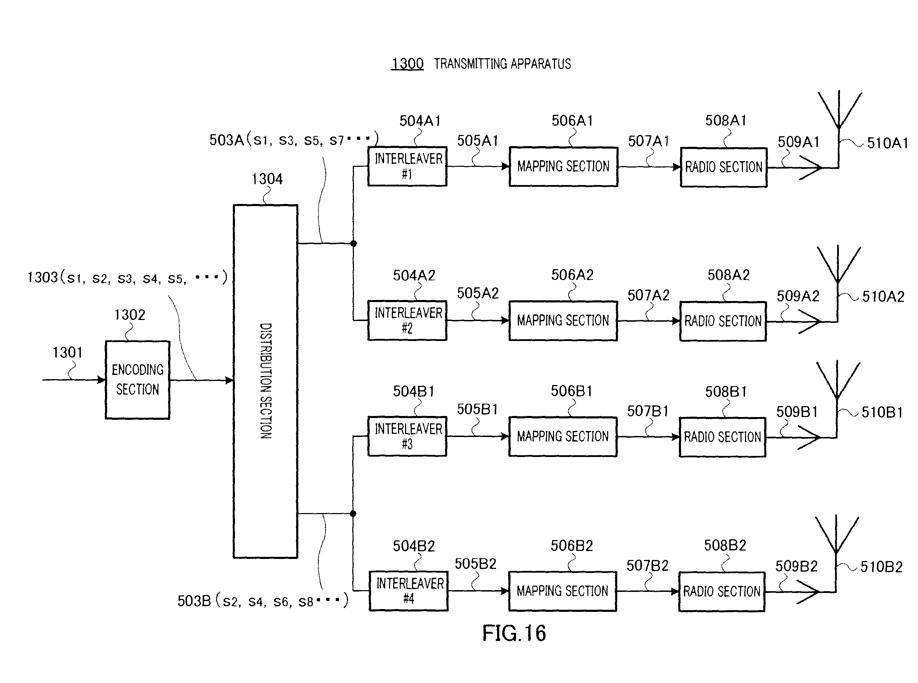

FIG.16 is a configuration example of a transmitting apparatus that is different from FIG.7. In FIG. 16 where the same reference numerals are assigned to corresponding parts as in FIG.7, transmitting apparatus 1300 has encoding section 1302 and distribution section 1304 that distributes encoded data 1303 outputted from encoding section 1302 to interleavers 504 A1, 504 A2, 504 B1 and 504 B2.

Encoding section 1301 encodes input data 1301 and outputs resulting encoded data 1303 to distribution section 1304.

By distributing encoded data 1303, distribution section 1304 outputs data 503A of modulated signal (stream) A to interleavers 504 A1 and 504 A2, and outputs data 503B of modulated signal (stream) B to interleavers 504 B1 and 504 B2.

When distribution section 1304 receives encoded data 1303 in the order of data s1, s2, s3, s4, s5 and ..., as input, distribution section 1304 assigns alternately these to data 503A of modulated signal (stream) A use and data 503B of modulated signal (stream) B use. Accordingly, distribution section 1304 outputs data s1, s3, s5 and ..., as data 503A of modulated signal (stream) A use and data s2, s4, s6 and ..., as data 503B of modulated signal (stream) B use. The method of assigning data is not necessarily alternate, and, any method may be applied to how to assign. The following operations in transmitting apparatus 1300 are the same as in transmitting apparatus 500 in FIG.7.

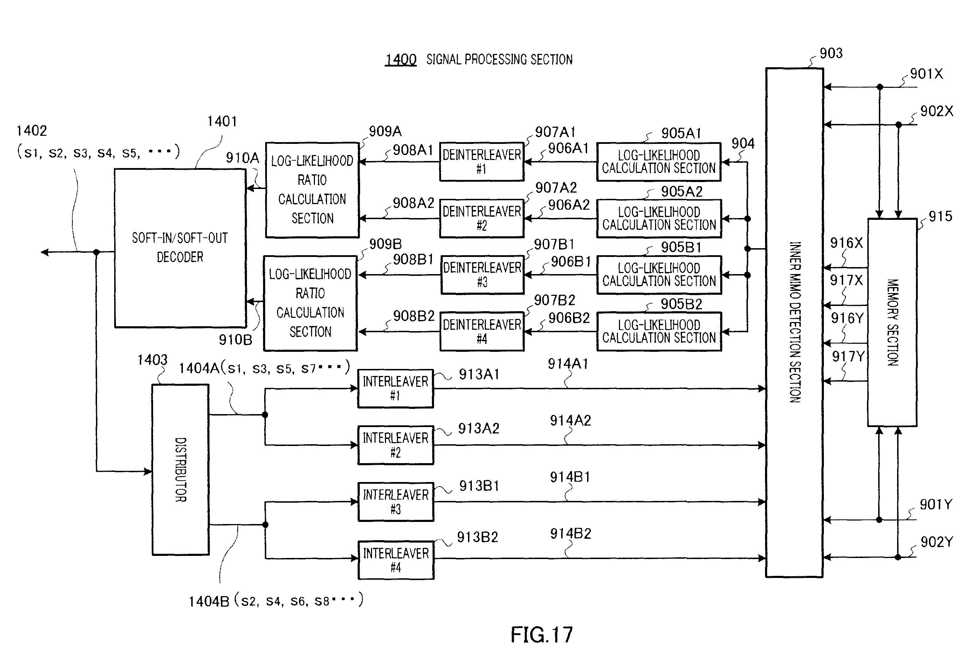

FIG.17 shows a configuration example of the signal processing section in a receiving apparatus for receiving a modulated signal transmitting apparatus 1300 in FIG.16 transmits. That is, signal processing section 1400 with the configuration of FIG.17 may be adopted as signal processing section 809 in FIG.11. In FIG.17, the same reference numerals are assigned to the components operating as the same manner in FIG.12.

Soft-in/soft-out decoder 1401 receives log-likelihood ratio signals 910A and 910B as input a nd acquires log-likelihood ratios 1402 after decoding by performing decoding that supports to encoding in encoding section 1302 in FIG.16.

By distributing decoded log-likelihood ratios 1402, distributor 1403 outputs decoded log-likelihood ratios 1404A of modulated signal (stream) A to interleavers #1 (913 A1) and #2 (913 A2), and decoded log-likelihood ratios 1404B of modulated signal (stream) B to interleavers #3 (913 B1) and #4 (913 B2).

Here, distributor 1403 receives the log-likelihood ratios in the order of s1, s2, s3, s4, s5 and ..., as input, and outputs the log-likelihood ratios of s1, s3, s5 and ..., as decoded log-likelihood ratios 1404A of modulated signal (stream) A, to interleavers #1 (913 A1) and #2 (913 A2) and outputs the log-likelihood ratios of s2, s4, s6, ..., as decoded log-likelihood ratios 1404B of modulated signal (stream) B, to interleavers #3 (913 B1) and #4 (913 B2). Other operations are same as in FIG.12.

Also in these systems in FIGs.16 and 17, it is possible to draw the same factor graph as in systems in FIGs.7 and 12. Accordingly, even when the configurations in FIGs.16 and 17 are adopted, it is possible to improve received quality as in the cases where the configuration in FIG.12 is adopted. That is, the number of encoders is not significant meaning with the present embodiment. Transmitting the same encoded data a plurality of times from different antennas (e.g. transmitting the same encoded data 503A from antennas 510 A1 and 510 A2) and the interleaving method are important to improve received quality with the present embodiment.

Although cases have been explained with the examples above the number of transmit antennas are four and the number of receive antennas are two, the present embodiment is not limited to this. The system configuration method at that time will be explained.

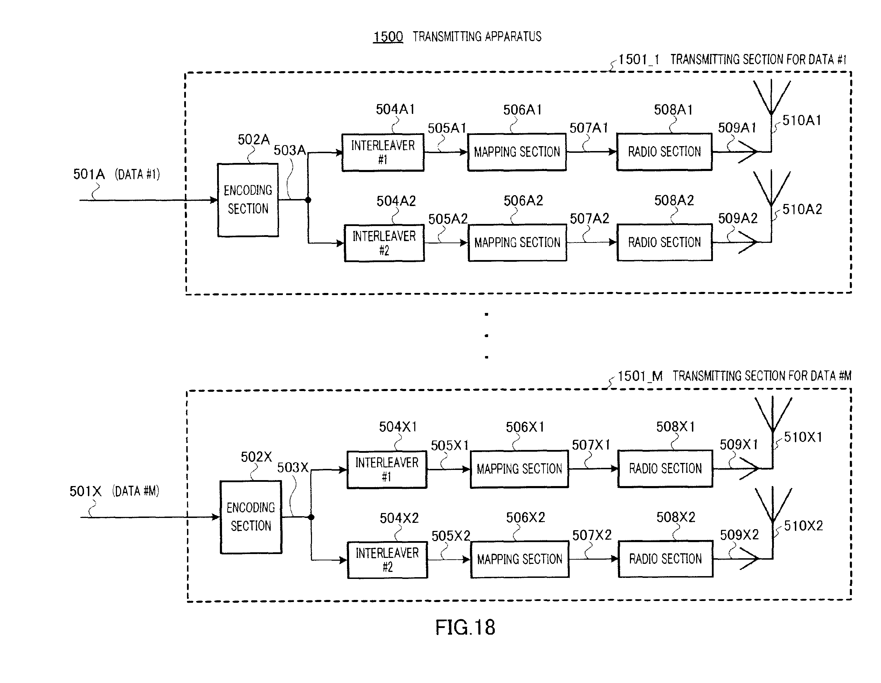

FIG.18 shows an example of a configuration of a transmitting apparatus with 2M transmit antennas. In FIG.18, the same reference numerals are assigned to the components operating as in the same manner as in FIG.7.

In FIG.18, there are M sequences of data #1, data #2, ... and data #M (M is an integer equal to or greater than two). Transmitting apparatus 1500 has total M transmitting sections of transmitting apparatus for data #1 1501_1 to transmitting apparatus for data #M 1501_M. Further, transmitting apparatuses 1501_1 to 1501_M each have encoding section 502A (502X) that encodes transmission data as input, N interleavers 504 A1 and 504 A2 (504 X1 and 504 X2) (N is an integer equal to or greater than two) that interleave encoded data 503A (503X) acquired by encoding section 502A (502X) using different interleaving patterns, and N antennas 510 A1 and 510 A2 (510 X1 and 510 X2) that transmit signals acquired by interleavers 504 A1 and 504 A2 (504 X1 and 504 X2).

By this configuration, in transmitting apparatus 1500, k-th data #k (k=1, 2, ... and M) is subjected to two different patterns of interleaving processing and transmitted as two types of modulated signals. In the example of FIG.18, there are 2M interleavers, and what is important as described above is to employ the different interleaving patterns in these 2M interleavers.

If the configuration of FIG.18 is adopted, a pilot symbol for estimating channel condition is required on a per modulated signal basis (2M modulated signals) when the signals having the frame configurations of FIG.8 are transmitted.

The receiving apparatus may be configured by adding more components to the above-described configurations of FIGs.11 and 12 as modulated signals increase more. The signal processing method in signal processing section 809 is basically the same as the method in FIG.12.

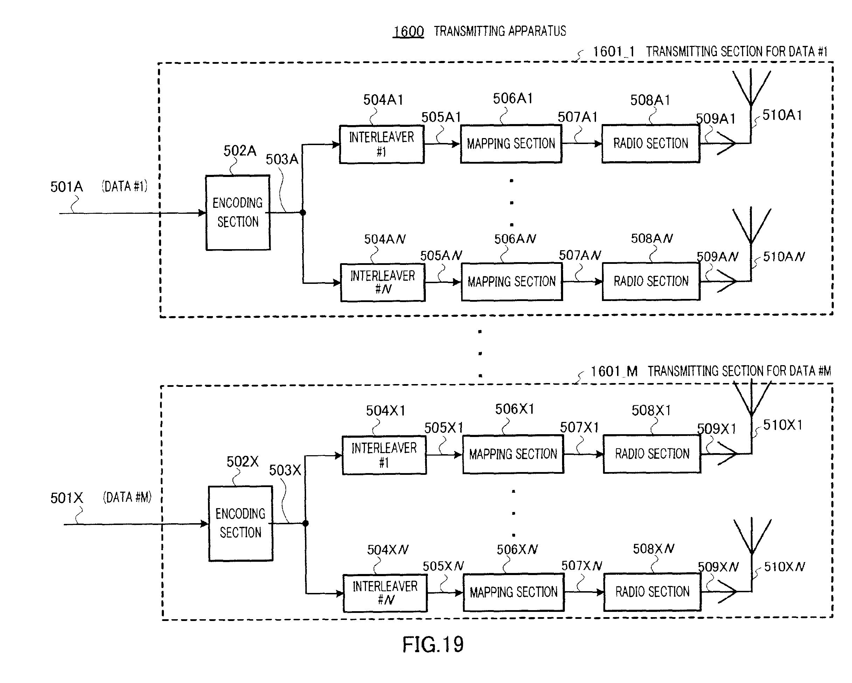

Next, FIG.19 shows the generalized configuration of the transmitting apparatus. In FIG.19, the same reference numerals are assigned to the components operating as the same manner as in FIG.7.

In FIG.19, there are M sequences of data #1, data #2, ... and data #M. Transmitting apparatuses 1601_1 to 1601_M each have N interleavers 504 A1 to 504AN (504 X1 to 504XN) having different interleaving patterns. By this configuration, in transmitting apparatus 1600, k-th data #k (k=1, 2, ... and M) is subjected to N different patterns of interleaving processing and transmitted as N types of modulated signals (N edges can be acquired). There are NM interleavers, and what is important as described above is to employ the different interleaving patterns in these NM interleavers.

If the configuration of FIG.19 is adopted, a pilot symbol for estimating channel condition is required on a per modulated signal basis (NM modulated signals) when the signals having the frame configurations of FIG.8 is transmitted.

The receiving apparatus may be configured by adding more components to the above-described configurations of FIGs.11 and 12 as modulated signals increase more. The signal processing method in signal processing section 809 is basically the same as the method in FIG.12.

Although a configuration has been described above with reference to FIGs.18 and 19 where one encoding section 502 is provided each of transmitting apparatuses 1501_1 to 1501_M (1601_1 to 1601_M), (that is, a configuration where M encoding sections 502 are provided in total), the present embodiment is not limited to this, and, even when one encoder and a distributor are provided as M encoding sections, the present embodiment may be implemented in the same way and provide the same advantage as described above. Further, the present embodiment may be implemented in the same way by providing less than M encoders and a plurality of distributors, and by providing encoded data to interleavers of transmitting sections 1501_1 to 1501_M (1601_1 to 1601_M). As described above, the number of encoders does not have influence upon the present embodiment, and it is possible to acquire the same effect regardless of the number of encoders.

Further, although a case has been explained with the present embodiment above where all transmitting apparatuses 1501_1 to 1501_M (1601_1 to 1601_M) have N interleavers (N is an integer equal to or greater than two) that interleave encoded data acquired from the same transmission data using different interleaving patterns, and N antennas that transmit signals acquired by the interleavers, it is not necessary to provide all of transmitting apparatuses 1501_1, ... and 1501_M (1601_1, ... and 1601_M) in the same configuration. If at least one of transmitting apparatuses 1501_1 to 1501_M (1601_1 to 1601_M) has the above configuration, the effect can be acquired to some extent.

As described above, the transmitting apparatus of the present embodiment has M transmitting sections for interleaving, mapping and transmitting encoded data of M sequences (M is an integer equal to or greater than two) from a plurality of antennas, and at least one of M transmitting sections has N interleavers (N is an integer equal to or greater than two) for interleaving encoded data acquired from identical transmission data with different interleaving patterns, and N antennas for transmitting signals acquired by the interleavers. By this means, it is possible to realize a transmitting apparatus that improves time, frequency and space diversity gain and improves received quality when iterative detection is performed on the receiving apparatus side using soft values.

Further, the transmission method presented with the present embodiment is a method of distributing k-th encoded data ($1 < k < M : M > 2$) into a plurality of sequences, performing n-th interleaving on n-th distributed data ($2 < n < N : N > 2$), and transmitting mapped modulated signals from the n-th antenna ($n > 2$), thereby making N interleaving patterns different. By this means, it is possible to realize a transmitting apparatus that improves time, frequency and space diversity gain and improves received quality when iterative detection is performed on the receiving apparatus side using soft values.

Although a case has been explained with the present embodiment where the number of antennas in the receiving apparatus is two, the present embodiment may be implemented in the same manner even when the number of antennas of the receiving apparatus increases. That is, the number of antennas of the receiving apparatus does not have influence on essential operations and effects of the present embodiment.

Further, although LDPC codes have been mainly explained with the present embodiment as an example, the present embodiment is not limited to these. Further, although a case has been explained with an example where sum-product decoding is performed by a soft-in/soft-out decoder, the present embodiment is not limited to this, and other soft-in/soft-out decoding methods including BCJR algorithm, SOVA algorithm and Msx-log-MAP algorithm may be employed. These decoding methods are shown in Non-Patent Document 7 in detail.

Further, although a single-carrier method has been explained as an example with the present embodiment, the present embodiment is not limited to this, and the present embodiment may be applicable to a multicarrier method. Further, the transmitting apparatus and transmission method of the present embodiment may be applicable to, for example, a spread spectrum communication scheme, OFDM scheme and SC-FDMA (Single carrier Frequency Division Multiple Access).

Further, symbols other than data symbols, for example, pilot symbols (preambles, unique words and so on) and symbols for control information can be implemented regardless of their arrangement in a frame. This applies to embodiments described later.

Incidentally, the transmitting apparatus and transmission method of the present embodiment differ from the transmission method of Non-Patent Document 8 in that it is not necessary to find complex conjugate and inserting positions in the process corresponding to interleaving are different. By this means, the transmitting apparatus and transmission method of the present embodiment provide an advantage of transmitting three times or four times more easily than the transmission method in Non-Patent Document 8.

(Embodiment 2)

With the present embodiment, a case will be explained where the present invention is applied to an OFDM scheme as a multicarrier scheme. Although the transmission method, transmitting apparatus, reception method and receiving apparatus including generalization have been explained with Embodiment 1, now, for ease of explanation, a case will be explained with examples where the configurations of FIGs.7, 11 and 12 are changed to an OFDM scheme. Naturally, the generalized configuration explained in Embodiment 1 may be implemented by changing it to an OFDM scheme.

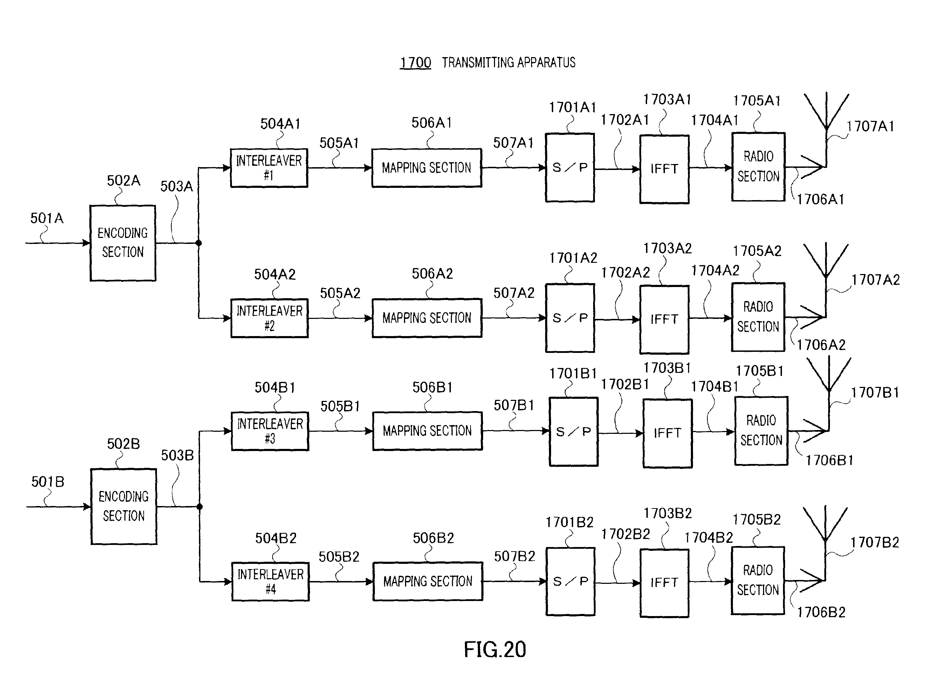

FIG.20 where the same reference numerals are assigned to corresponding parts as in FIG.7 is a configuration example of the transmitting apparatus in the present embodiment. Mapping sections 506 A1 and 506 A2 in transmitting apparatus 1700 output baseband signals 507 A1 and 507 A2 to serial-to-parallel (S/P) conversion sections 1701 A1 and 1701 A2, respectively. Further mapping sections 506 B1 and 506 B2 output baseband signals 507 B1 and 507 B2 to serial-to-parallel (S/P) conversion section 1701 B1 and 1701 B2, respectively.

Serial-to-parallel (S/P) conversion sections 1701 A1 and 1701 A2 convert baseband signals 507 A1 and 507 A2 to parallel signals, respectively, and output parallel signals 1702 A1 and 1702 A2 to inverse fast Fourier transform (IFFT) sections 1703 A1 and 1703 A2.

Fourier transform sections 1703 A1 and 1703 A2 perform inverse Fourier transform on parallel signals 1702 A1 and 1702 A2, respectively, and output signals after inverse fast Fourier transform 1704 A1 and 1704 A2 to radio sections 1705 A1 and 1705 A2.

Radio sections 1705 A1 and 1705 A2 perform processing including frequency conversion on signals 1704 A1 and 1704 A2 after inverse fast Fourier transform, and output resulting transmission signals 1706 A1 and 1706 A2 to antennas 1707 A1 and 1707 A2.

The operations of serial-to-parallel (S/P) conversion sections 1701 B1 and 1701 B2, inverse fast Fourier transform (IFFT) sections 1703 B1 and 1703 B2, and radio sections 1705 B1 and 1705 B2 are the same as the operations of serial-to-parallel (S/P) conversion sections 1701 A1 and 1701 A2, inverse fast Fourier transform (IFFT) sections 1703 A1 and 1703 A2, and radio sections 1705 A1 and 1705 A2, and therefore the description is omitted.

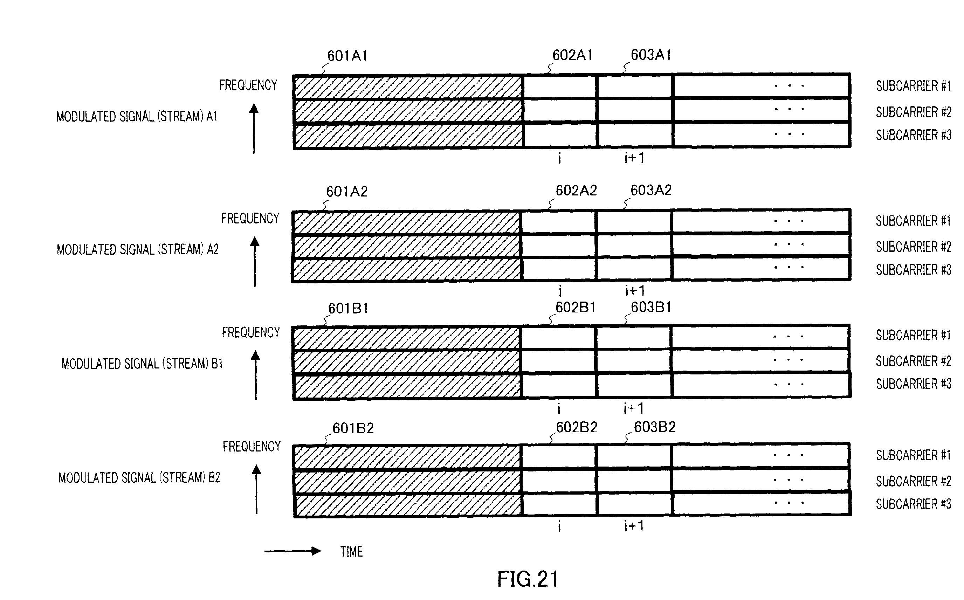

FIG.21 shows a configuration example of the transmission frames of transmitting apparatus 1700. The horizontal axis shows time domain, and the vertical axis shows frequency domain. In FIG.21, the same reference numerals are assigned to components as in FIG.8. FIG.21 differs from FIG.8 in that symbols are present in the frequency domain because subcarriers are present. In FIG.21, symbols with the same subcarrier index are transmitted from a plurality of antennas in the same frequency at the same time.

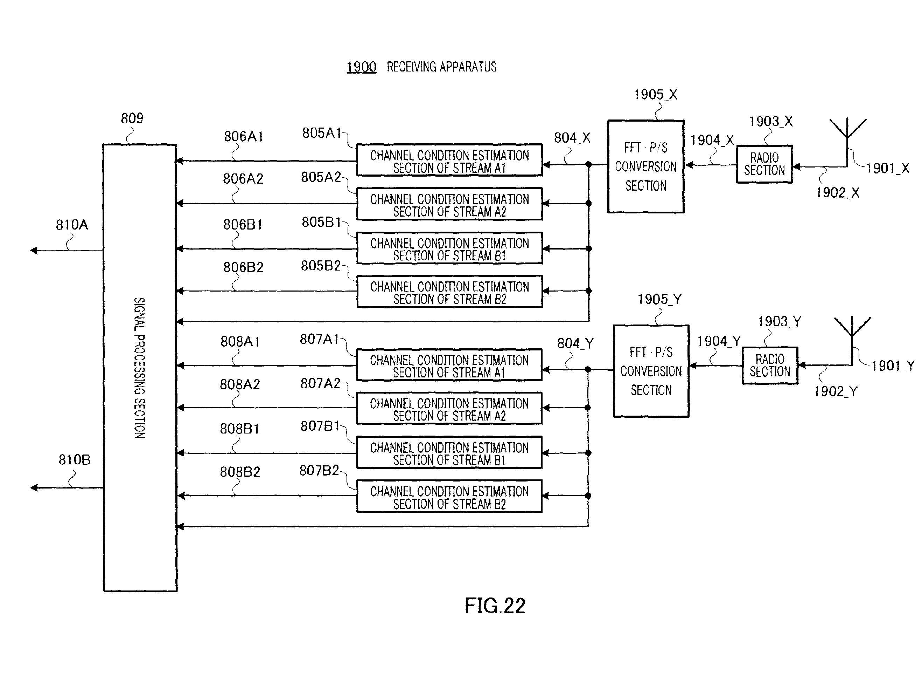

FIG.22 where the same reference numerals are assigned to corresponding parts as in FIG.11, shows a configuration example of the receiving apparatus according to the present embodiment. Receiving apparatus 1900 receives a signal transmitted from transmitting apparatus 1700 via antennas 1901_X and 1901_Y.

Radio section 1903_X performs processing including frequency conversion for received signal 1902_X received in antenna 1901_X, and outputs resulting baseband signal 1904_X to Fourier transform and parallel-to-serial conversion section (FFT·P/S conversion section) 1905_X. Fourier transform and parallel-to-serial conversion section 1905_X performs Fourier conversion on baseband signal 1904_X and then converts the parallel signal to a serial signal, and outputs resulting serial signal 804_X.

Radio section 1903_Y and Fourier transform and parallel-to-serial conversion section (FFT·P/S conversion section) 1905_Y perform the same processing as the above-described radio section 1903_X and Fourier transform and parallel-to-serial conversion section (FFT·P/S conversion section) 1905_X. Further, subsequent circuits to Fourier transform and parallel-to-serial conversion sections 1905_X and 1905_Y perform the same processing as explained in Embodiment 1.

By this means, it is possible to perform the same processing in an OFDM scheme as processing described in Embodiment 1.

Next, a configuration example different from transmitting apparatus 1700 in FIG.20 and receiving apparatus 1900 in FIG.22 will be explained.

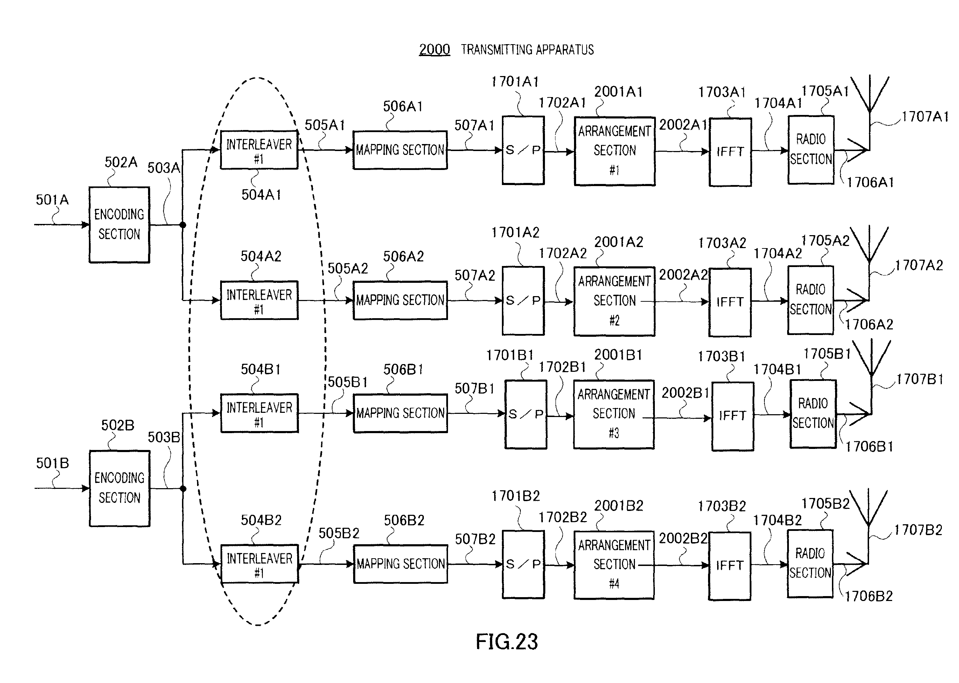

FIG.23 where the same reference numerals are assigned to corresponding parts as in FIGs.7 and 20, shows an another example of a configuration of the transmitting apparatus. Hereinafter, in FIG.23, parts different from FIGs.7 and 20 will be explained.

In transmitting apparatus 2000 in FIG.23, interleaving patterns of interleavers 504 A1, 504 A2, 504 B1 and 504 B2 are all the same. That is, interleavers 504 A1, 504 A2, 504 B1 and 504 B2 are configured with all the same interleavers #1.

In addition, transmitting apparatus 2000 has arrangement sections #1 to #4 (2001 A1, 2001 A2, 2001 B1 and 2001 B2). Arrangement section #1 (2001 A1) receives parallel signal 1702 A1 as input, arranges this, and outputs arranged parallel signal 2002 A1. Similarly, arrangement sections #2 to #4 (2001 A2, 2001 B1 and 2001 B2) receive parallel signals 1702 A2, 1702 B1 and 1702 B2 as input, arrange these, and outputs arranged parallel signals 2002 A2, 2002 B1 and 2002 B2.

Here, the arrangement methods of arrangement section #1 (2001 A1), arrangement section #2 (2001 A2) arrangement section #3 (2001 B1) and arrangement section #1 (2001 B2) all vary.

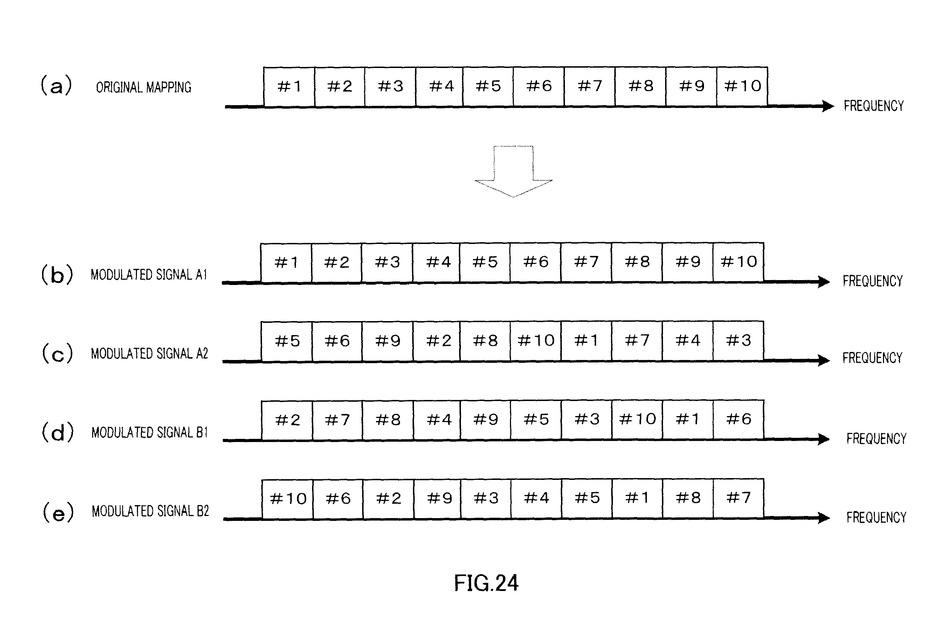

FIG.24 shows an example of the arrangement method. FIG.24(a) shows data mapping of a parallel signal in the frequency domain before arrangement. One white square in the figure represents one subcarrier. #1 to #3 are reference numerals assigned for identifying data symbols.

Arrangement section #1 (2001 A1) arranges the symbols in the order of FIG.24(a) to the order of FIG.24(b). Arrangement section #2 (2001 A2) arranges the symbols in the order of FIG.24(a) to the order of FIG.24(c). Arrangement section #3 (2001 B1) arranges the symbols in the order of FIG.24(a) to the order of FIG.24(d). Arrangement section #4 (2001 B2) arranges the symbols in the order of FIG.24(a) to the order of FIG.24(e).

The receiving apparatus for receiving a signal transmitted from transmitting apparatus 2000 may be configured as same as shown in FIG.22. The interleaving patterns in interleaving patterns of deinterleavers 907 A1, 907 A2, 907 B1 and 907 B2 (FIG.12) and interleavers 913 A1, 913 A2, 913 B1 and 913 B2 (FIG.12) provided in signal processing 809 need to support the arrangement of data order in the interleavers and arrangement sections in FIG.23.

As described above, according to the transmitting apparatus and transmission method of the present embodiment, also in multi-carrier transmitting apparatus and multi-carrier transmission method, similar to Embodiment 1, it is possible to realize a transmitting apparatus and transmission method that improve time, frequency and space diversity gain and improve received quality when iterative detection is performed on the receiving apparatus side using soft values.

Although a case have been explained with the present embodiment above the number of transmit antennas are four and the number of receive antennas are two, the present embodiment is not limited to this, and it is possible for the generalized configurations and methods described in Embodiment 1 to expand the technique of adopting OFDM in the present embodiment.

Further, as described in Embodiment 1, the number of encoding sections is not significant meaning with the present embodiment. Transmitting the same encoded data a plurality of times from different antennas and the interleaving method are important to improve received quality with the present embodiment.

(Embodiment 3)

Although the transmission method, transmitting apparatus, reception method and receiving apparatus that improve diversity gain using interleavers have been explained with embodiments 1 and 2, different methods and apparatuses for providing the same advantages will be explained with the present embodiment.

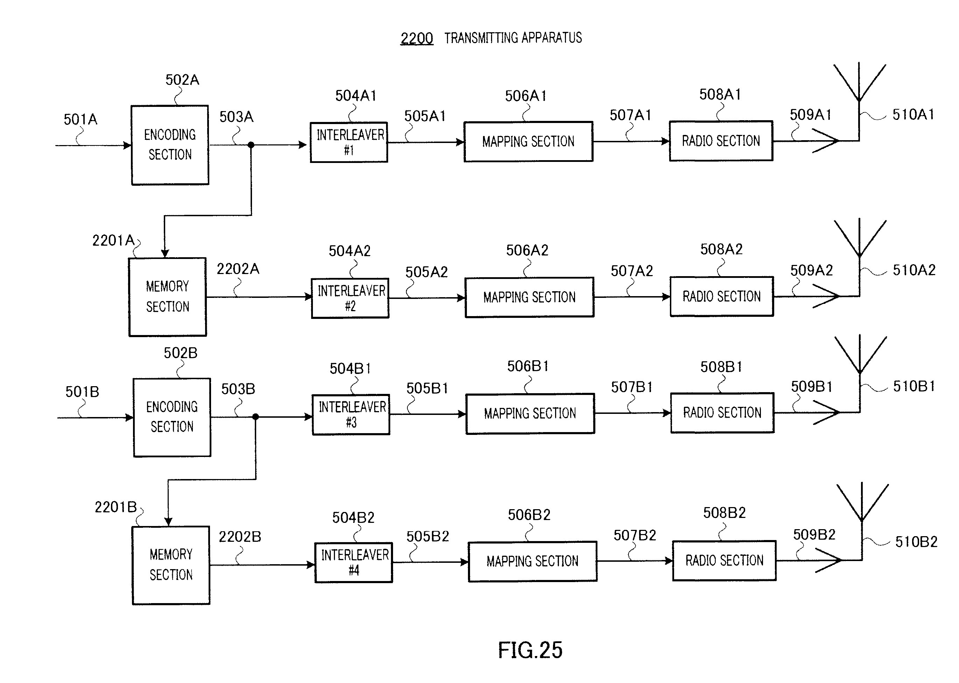

FIG.25 where the same reference numerals are assigned to corresponding parts as in FIG.7 shows a configuration example of the transmitting apparatus according to the present embodiment. Transmitting apparatus 2200 has memory sections 2201A and 2201B.

Memory section 2201A stores encoded data 503A on a temporary basis and outputs stored data 2202A at a certain time. Similarly, memory section 2201B stores encoded data 503B on a temporary basis and outputs stored data 2202B at a certain time.

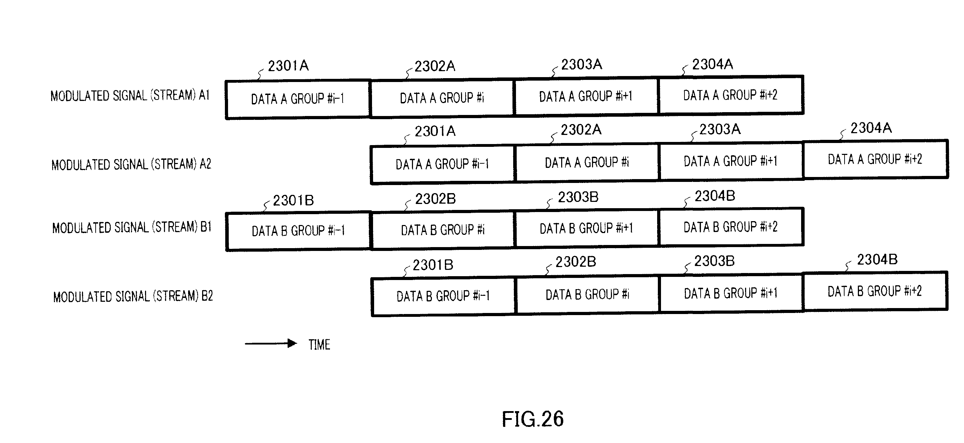

FIG.26 shows a configuration example of transmission frames in the time domain transmitted from transmitting apparatus 2200. To simplify the figure, pilot symbols and controls symbols are omitted in FIG.26. Similar to FIG.8, symbols of the same time are transmitted from different antennas using the same frequency. In FIG.26, "data group" is formed with a plurality of bits and shows a data unit (group) subjected to iterative decoding (iterative detection).

FIG.26 shows the frame configuration of modulated signal (stream) A1 of FIG.25 (i.e. frame configuration of a signal transmitted from antenna 510 A1), the frame configuration of modulated signal (stream) A2 of FIG.25 (i.e. frame configuration of a signal transmitted from antenna 510 A2), the frame configuration of modulated signal (stream) B1 of FIG.25 (i.e. frame configuration of a signal transmitted from antenna 510 B1) and the frame configuration of modulated signal (stream) B2 of FIG.25 (i.e. frame configuration of a signal transmitted from antenna 510 B2).

Reference numerals 2301A denote i-1th data group of data A group, and are transmitted at different times in modulated signal (stream) A1 and modulated signal (stream) A2. Similarly, reference numerals 2302A denote i-th data group of data A group, and are transmitted at different times in modulated signal (stream) A1 and modulated signal (stream) A2. Similarly, reference numerals 2303A denote i+1th data group of data A group, and are transmitted at different times in modulated signal (stream) A1 and modulated signal (stream) A2. Reference numerals 2304A denote i+2th data group of data A group, and are transmitted at different times in modulated signal (stream) A1 and modulated signal (stream) A2.

Reference numerals 2301B denotes i-1th data group of data B group, and are transmitted at different times in modulated signal (stream) B1 and modulated signal (stream) B2. Similarly, reference numerals 2302B denote i-th data group of data B group, and are transmitted at different times in modulated signal (stream) B1 and modulated signal (stream) B2. Similarly, reference numerals 2303B denote i+1th data group of data B group, and are transmitted at different times in modulated signal (stream) B1 and modulated signal (stream) B2. Similarly, reference numerals 2304B denote i+2th data group of data B group, and are transmitted at different times in modulated signal (stream) B1 and modulated signal (stream) B2.

In transmitting apparatus 2200 in FIG.25, interleaving patterns of interleaver #1 (504 A1), interleaver #2 (504 A2), interleaver #3 (504 B1) and interleaver #4 (504 B2), all vary. By this means, in the receiving apparatus, diversity gain improves as in Embodiment 1, so that received quality improves.

Apart from the case where all interleaving patterns vary, the following configuration provides the same advantage. The configuration meets the conditions <1> and <2>.

<1> The interleaving pattern of interleaver #1 and the interleaving pattern of interleaver #3 are different.

<2> The interleaving pattern of interleaver #1 and the interleaving pattern of interleaver #2 are the same, and the interleaving pattern of interleaver #3 and the interleaving pattern of interleaver #4 are the same.

The reason condition <1> is required is apparent from the difference between the factor graphs of FIGs.4 and 5 as described in Embodiment 1.

Further, also in condition <2> (i.e. there are interleavers having the same interleaving pattern), by transmitting the same data groups at the different times like the frame configurations in FIG.26, it is possible to draw a factor graph like FIG.15. Consequently, diversity gain improves as in Embodiment 1, so that received quality improves. Further, an interleaver can be shared by applying <2>, so that it is possible to reduce the computing scale and computational complexity.

Although a case has been explained with the example of FIG.25 where, by providing memory sections 2201 before interleavers 504, time differences are provided between encoded data inputted to interleavers 504, it is equally possible to provide time differences between interleaved encoded data outputted from interleaving sections 504 by providing memory sections after interleavers 504.

The receiving apparatus for receiving a signal transmitted as in the present embodiment may be configured as in FIGs.11 and 12 explained in Embodiment 1. To enable the receiving apparatus to operate in the same way as in FIG.13, the receiving apparatus needs to carry out iterative operations as in FIG.13 after all of the symbols shown in FIG.26 have been received.

By implementing the present embodiment as above, diversity gain improves as in Embodiment 1, so that received quality improves.

Although a case has been explained with the present embodiment where the number of transmit antennas are four and the number of receive antennas are two, the present embodiment is not limited to this, and the generalized configuration and method described in Embodiment 1 may develop the technique of the present embodiment.

Although a case has been explained with the present embodiment where the number of antennas in the receiving apparatus is two, the present embodiment may be implemented even when the number of antennas of the receiving apparatus increases. That is, the number of antennas of the receiving apparatus does not have influence on essential operations and effects of the present embodiment.

As described in Embodiment 1, the number of encoding sections is not significant meaning with the present embodiment. Transmitting the same encoded data a plurality of times from different antennas and the interleaving method are important to improve received quality with the present embodiment.

Further, although a single-carrier method has been explained as an example with the present embodiment, the present embodiment is not limited to this, and the present embodiment may be applicable to a multicarrier method. Further, the transmitting apparatus and transmission method of the present embodiment may be applicable to, for example, a spread spectrum communication scheme, OFDM scheme and SC-FDMA (Single carrier Frequency Division Multiple Access).

The disclosure of Japanese Patent Application No.2007-173470, filed on June 29, 2007, including the specification, drawings and abstract, is incorporated herein by reference in its entirety.

Industrial Applicability

The present invention is widely applicable to radio systems transmitting different modulated signals from a plurality of antennas, and is suitable for use in, for example, OFDM-MIMO communication systems.

**Claims**

1. A multi-antenna transmitting apparatus comprising:

M transmitting sections, each transmitting section configured to interleave, map and transmit sequences of encoded data, M being an integer equal to or greater than two,
wherein at least one of the M transmitting sections comprises:
N interleavers configured to interleave encoded data acquired from the same transmission data using different interleaving patterns, N being an integer equal to or greater than two; and
N antennas configured to transmit signals acquired by the N interleavers.

2. A multi-antenna transmitting apparatus according to claim 1, wherein the M transmitting sections employ different interleaving patterns.

3. A multi-antenna transmitting apparatus comprising:

M transmitting sections configured to interleave, map and transmit M sequences of encoded data, M being an integer equal to or greater than two,
wherein each M transmitting section comprises:

a plurality of interleavers configured to interleave encoded data acquired from the same transmission data using different interleaving patterns; and
a plurality of antennas that are provided in a number equal to the number of said interleavers and configured to transmit signals acquired by said interleavers.

4. A multi-antenna transmitting apparatus according to claim 3, wherein said M transmitting sections employ different interleaving patterns.

5. A multi-antenna transmitting apparatus comprising:

M transmitting sections configured to interleave, map and transmit M sequences of encoded data , M being an integer equal to or greater than two,
wherein each M transmitting section comprises:

a plurality of interleavers configured to interleave encoded data acquired from the same transmission data using different interleaving patterns;
a section configured to provide a time difference between the encoded data received as input to the interleavers, or between interleaved encoded data outputted from the interleavers; and
antennas that are provided in a number equal to the number of interleavers and configured to transmit interleaved signals; and

wherein said M transmitting sections employ different interleaving patterns.

6. A multi-antenna transmission method comprising:

distributing k-th encoded data to a plurality of sequences, k being $1 \leq k \leq M:M \geq 2$; and
performing n-th interleaving on the n-th distributed data, n being $2 \leq n \leq N:N \geq 2$, and transmitting a mapped modulated signal from a n-th antenna, n being $\geq 2$,
wherein N interleaving patterns vary.

7. A multi-antenna transmitting method comprising:

distributing k-th encoded data to a plurality of sequences, k being $1 \leq k \leq M:M \geq 2$; and
performing n-th interleaving on the n-th distributed data, n being $2 \leq n \leq N:N \geq 2$, and transmitting a mapped modulated signal from a n-th antenna, n being $\geq 2$,
wherein MN interleaving patterns vary.

FIG.1A

FIG.1B

FIG.2A

FIG.2B

FIG.3

FIG.4

☐ : NODE UPON DETECTION
○ : SYMBOL TRANSMITTED $is$-TH

CHECK NODES

VARIABLE NODES

VARIABLE NODES

CHECK NODES

STREAM A

EXTRINSIC VALUE
$\alpha_m \Omega^a_{is,js}$

PRIORI VALUE
$\beta_m \Omega^a_{is,js}$

$\Omega^a_{is,1}$

$\Omega^a_{is,2}$

$\Omega^a_{is,3}$

$\Omega^a_{is,4}$

$L\Omega^a_{is,js}$

$\lambda_{k,n_a}$

AXIS OF SYMMETRY

$\lambda_{k,n_b}$

$L\Omega^b_{is,js}$

$\Omega^b_{is,1}$

$\Omega^b_{is,2}$

$\Omega^b_{is,3}$

$\Omega^b_{is,4}$

STREAM B

PRIORI VALUE
$\beta_m \Omega^b_{is,js}$

EXTRINSIC VALUE
$\alpha_m \Omega^b_{is,js}$

□ : NODE UPON DETECTION

○ : SYMBOL TRANSMITTED $ia$ -TH

← CHECK NODES

EXTRINSIC VALUE
$\alpha_m \Omega^a_{ia,ja}$

PRIORI VALUE
$\beta_m \Omega^a_{ia,ja}$

STREAM A

... $\Omega^a_{ia,1}$ ...... $\Omega^a_{ia,3}$ ...... $\Omega^a_{ia,4}$

← VARIABLE NODES

$\Omega^a_{ia,2}$

$L\Omega^a_{is,js}$ → ← $\lambda_{k,na}$

AXIS OF SYMMETRY ——————————————

$L\Omega^b_{is,js}$ → ← $\lambda_{k,nb}$

$\Omega^b_{ia,3}$

$\Omega^b_{ia,1}$ $\Omega^b_{ia,4}$

PRIORI VALUE
$\beta_m \Omega^b_{ib,jb}$

STREAM B

... ...... $\Omega^b_{ia,2}$ ... ... ............ ... ← VARIABLE NODES

EXTRINSIC VALUE
$\alpha_m \Omega^b_{ib,jb}$

← CHECK NODES

FIG.5

EP 2 164 177 A1

STREAM A → 201_1 OUTER ENCODER → 202_1 $\pi_a$

STREAM B → 201_2 OUTER ENCODER → 202_2 $\pi_b$

203 MODULATOR → $s$ T

FIG.6

FIG.7

EP 2 164 177 A1

FIG.8

FIG.9

FIG.10

EP 2 164 177 A1

FIG.11

FIG.12

| 1 CODEWORD OF MODULATED SIGNAL (STREAM) A |
| --- |

| 1 CODEWORD OF MODULATED SIGNAL (STREAM) B |
| --- |

ERROR CORRECTION FOR FIRST TIME

UPDATING LLR AGAIN USING LLR AFTER SOFT-IN/SOFT-OUT
FOR FIRST TIME

| 1 CODEWORD OF MODULATED SIGNAL (STREAM) A |
| --- |

| 1 CODEWORD OF MODULATED SIGNAL (STREAM) B |
| --- |

ERROR CORRECTION FOR SECOND TIME

.
.
.
.
.

FIG.13

Q

I

1102 (0,0,0,0,0,0,0,0)

1101  RECEIVED SIGNAL POINT

1103 (1,1,1,1,1,1,1,1)

FIG.14

EP 2 164 177 A1

FIG.15

1300 TRANSMITTING APPARATUS

503A (s1, s3, s5, s7 • • •)

504A1   505A1   506A1   507A1   508A1   509A1   510A1

INTERLEAVER #1 → MAPPING SECTION → RADIO SECTION

1304

1303 (s1, s2, s3, s4, s5, • • •)

504A2   505A2   506A2   507A2   508A2   509A2   510A2

INTERLEAVER #2 → MAPPING SECTION → RADIO SECTION

1302

1301

ENCODING SECTION

DISTRIBUTION SECTION

504B1   505B1   506B1   507B1   508B1   509B1   510B1

INTERLEAVER #3 → MAPPING SECTION → RADIO SECTION

504B2   505B2   506B2   507B2   508B2   509B2   510B2

INTERLEAVER #4 → MAPPING SECTION → RADIO SECTION

503B (s2, s4, s6, s8 • • •)

FIG.16

FIG.17

FIG.18

EP 2 164 177 A1

FIG.19

1700 TRANSMITTING APPARATUS

FIG.20

EP 2 164 177 A1

FIG.21

FIG.22

EP 2 164 177 A1

FIG.23

2000 TRANSMITTING APPARATUS

FIG.24

2200 TRANSMITTING APPARATUS

FIG.25

FIG.26

MODULATED SIGNAL (STREAM) A1

2301A — DATA A GROUP #i-1
2302A — DATA A GROUP #i
2303A — DATA A GROUP #i+1
2304A — DATA A GROUP #i+2

MODULATED SIGNAL (STREAM) A2

2301A — DATA A GROUP #i-1
2302A — DATA A GROUP #i
2303A — DATA A GROUP #i+1
2304A — DATA A GROUP #i+2

MODULATED SIGNAL (STREAM) B1

2301B — DATA B GROUP #i-1
2302B — DATA B GROUP #i
2303B — DATA B GROUP #i+1
2304B — DATA B GROUP #i+2

MODULATED SIGNAL (STREAM) B2

2301B — DATA B GROUP #i-1
2302B — DATA B GROUP #i
2303B — DATA B GROUP #i+1
2304B — DATA B GROUP #i+2

TIME

# INTERNATIONAL SEARCH REPORT

| | International application No. |
|---|---|
| | PCT/JP2008/001641 |

A. CLASSIFICATION OF SUBJECT MATTER
$H04J15/00$(2006.01)i, $H03M13/09$(2006.01)i, $H04B7/04$(2006.01)i, $H04J11/00$
(2006.01)i, $H04L1/00$(2006.01)i

According to International Patent Classification (IPC) or to both national classification and IPC

B. FIELDS SEARCHED

Minimum documentation searched (classification system followed by classification symbols)
$H04J15/00$, $H03M13/09$, $H04B7/04$, $H04J11/00$, $H04L1/00$

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | Yutaka MURAKAMI, Shutai OKAMURA, Takaaki KISHIGAMI, Masayuki ORIHASHI, "LDPC Fugoka sareta VIP Kukan Taju MIMO System", IEICE Technical Report, 16 August, 2007 (16.08.07), Vol.107, No.192, pages 123 to 128 | 1-7 |
| A | Kobayashi, K. Murakami, Y. Orihashi, M. Matsuoka, T., Varying interleave patterns with iterative decoding for improved performance in MIMO systems, Personal Indoor and Mobile Radio Communications PIMRC 2004, 2004.09.08, Vol.2, pp.1429-1433 | 1-7 |

| ☒ Further documents are listed in the continuation of Box C. | ☐ See patent family annex. |

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 September, 2008 (09.09.08) | 22 September, 2008 (22.09.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/001641

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-157942 A  (Fujitsu Ltd.),<br>15 June, 2006 (15.06.06),<br>Par. Nos. [0113] to [0127]; Fig. 7<br>& JP 2002-314483 A      & US 2002/0150065 A1<br>& US 2007/0291870 A      & GB 2371947 A<br>& GB 2399998 A           & GB 2398975 A<br>& GB 102574 D0           & EP 1229669 A1 | 1-7 |
| A | JP 2002-542713 A  (Qualcomm Inc.),<br>10 December, 2002 (10.12.02),<br>Full text; all drawings<br>& US 6356528 B1          & US 2002/0036980 A1<br>& US 2007/0077886 A1     & EP 1169790 A1<br>& EP 1855392 A2          & WO 2000/064073 A1<br>& DE 60036099 D          & AU 4235600 A<br>& NO 20014975 A          & BR 9766 A<br>& IL 145694 D            & CA 2369959 A<br>& AU 774761 B            & HK 1042997 A<br>& KR 10-2006-0132051 A   & UA 66408 C<br>& CN 1346548 A           & RU 2252484 C<br>& AT 371304 T | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 200505885 A
- JP 2007173470 A

### Non-patent literature cited in the description

- **B. M. Hochwald ; S. ten Brink.** Achieving near-capacity on a multiple-antenna channel. *IEEE Trans. Commun.,* March 2003, vol. 51 (3), 389-399
- **B. Lu ; G. Yue ; X. Wang.** Performance analysis and design optimization of LDPC-coded MIMO OFDM systems. *IEEE Trans. Signal Processing,* February 2004, vol. 52 (2), 348-361
- **S. Bäro ; J. Hagenauer ; M. Witzke.** Iterative detection of MIMO transmission using a list-sequential (LISS) detector. *Proc. of IEEE ICC 2003,* May 2003
- **P. Robertson ; E. Villebrun ; P. Höher.** A comparison of optimal and sub-optimal MAP decoding algorithms in the log domain. *Proc. IEEE ICC 1995,* June 1995, 1009-1013
- **K. Kobayashi ; Y. Murakami ; M. Orihashi ; T. Matsuoka.** Varying interleave patterns with iterative decoding for improved performance in MIMO systems. *Proc. of IEEE PIMRC2004,* September 2004, vol. 2, 1429-1433
- Performance analysis and design optimization of LDPC-coded MIMO OFDM systems. *IEEE Trans. Signal Processing,* February 2004, vol. 52 (2), 348-361
- Performance analysis of DSTTD based on diversity-multiplexing trade-off. proc. IEEE VTC. spring, 2005